(19) Europäisches Patentamt

European Patent Office

Office européen des brevets

(11) **EP 4 383 900 A1**

(12) **EUROPEAN PATENT APPLICATION**
published in accordance with Art. 153(4) EPC

(43) Date of publication:
**12.06.2024 Bulletin 2024/24**

(21) Application number: **22863341.8**

(22) Date of filing: **26.08.2022**

(51) International Patent Classification (IPC):
***H04W 72/04*** (2023.01)

(52) Cooperative Patent Classification (CPC):
**H04L 5/00; H04W 52/02; H04W 72/04;**
**H04W 72/0446; H04W 72/0453; H04W 72/12;**
**H04W 72/23;** Y02D 30/70

(86) International application number:
**PCT/CN2022/115305**

(87) International publication number:
**WO 2023/030205 (09.03.2023 Gazette 2023/10)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **02.09.2021 CN 202111028825**

(71) Applicant: **Huawei Technologies Co., Ltd.**
**Shenzhen, Guangdong 518129 (CN)**

(72) Inventors:
• **FENG, Shulan**
  **Shenzhen, Guangdong 518129 (CN)**
• **ZHANG, Yangyang**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **RESOURCE INDICATION METHOD AND COMMUNICATION APPARATUS**

(57) This application provides a resource indication method and a communication apparatus, to resolve a problem that redundancy of control signaling is excessively high in a data transmission process. This helps improve network transmission efficiency and reduce power consumption of a scheduled node. The method includes: A terminal device monitors and receives first indication information in a first search space, where the first indication information indicates a frequency domain resource for receiving data. The terminal device monitors and receives second indication information in a second search space, where the second indication information indicates a start transmission moment for receiving the data, and a monitoring cycle of the first search space is greater than a monitoring cycle of the second search space. The terminal device receives the data from a network device based on the frequency domain resource and the start transmission moment.

FIG. 2

EP 4 383 900 A1

**Description**

This application claims priority to Chinese Patent Application No. 202111028825.0, filed with the China National Intellectual Property Administration on September 2, 2021 and entitled "RESOURCE INDICATION METHOD AND COMMUNICATION APPARATUS", which is incorporated herein by reference in its entirety.

**TECHNICAL FIELD**

This application relates to the field of communication technologies, and in particular, to a resource indication method and a communication apparatus.

**BACKGROUND**

Data transmission modes between a scheduling node and a scheduled node are generally classified into semi-persistent scheduling (semi-persistent scheduling, SPS) (also referred to as configured grant (configured grant, CG)) and dynamic grant (dynamic grant, DG). A configuration manner of the SPS is as follows: Data transmission is performed within a period of time based on an allocated resource after resource allocation signaling is sent once, and new resource allocation signaling does not need to be sent, resulting in low signaling redundancy. A configuration manner of the DG is as follows: Resource allocation signaling needs to be sent for each data transmission, resulting in high signaling redundancy.

If data to be transmitted between the scheduling node and the scheduled node is transmitted in the SPS (CG) mode, the data can be transmitted only after predefined duration expires. This increases a data transmission delay. In addition, a resource used for each transmission remains unchanged. This reduces flexibility of scheduling. To reduce the transmission delay and improve the flexibility of scheduling, the data to be transmitted between the scheduling node and the scheduled node may be transmitted in the foregoing DG mode. However, a quantity of bits of control signaling required in this mode is large, and generally may reach dozens to hundreds of bits. This scheduling mode not only increases redundancy of the control signaling and reduces network transmission efficiency, but also causes excessively high power consumption of the scheduled node due to frequent and large blind detection of a control channel.

**SUMMARY**

This application provides a resource indication method and a communication apparatus, to resolve a problem that redundancy of control signaling is excessively high in a data transmission process. This helps improve network transmission efficiency and reduce power consumption of a scheduled node.

According to a first aspect, this application provides a resource indication method. The method may be performed by a terminal device or a chip used in a terminal device. The following provides descriptions by using an example in which the method is performed by the terminal device. The method includes: The terminal device monitors and receives first indication information in a first search space, where the first indication information indicates a frequency domain resource for first data. The terminal device monitors and receives second indication information in a second search space, where the second indication information indicates a start transmission moment for the first data, and a monitoring cycle of the first search space is greater than a monitoring cycle of the second search space. The terminal device receives the first data based on the frequency domain resource and the start transmission moment.

In this application, the terminal device receives the first indication information sent by a network device in the monitoring cycle of the first search space. Because the monitoring cycle of the first search space is greater than the monitoring cycle of the second search space, high redundancy of transmission of scheduling signaling caused by repeated sending of a frequency resource in the second search space is avoided. According to the solution of this application, a quantity of times of receiving frequency domain resource information can be reduced, to reduce the redundancy of transmission of the scheduling signaling, improve network transmission efficiency, and reduce power consumption of the terminal device. The terminal device receives the second indication information sent by the network device in the monitoring cycle of the second search space. Compared with semi-persistent scheduling, data transmission can be triggered in a timely manner when data arrives, and a waiting delay for data transmission is reduced. In a possible design, the first indication information further indicates at least one of the following information: a modulation and coding scheme for the first data or a size of a time domain resource for the first data; or the second indication information further indicates at least one of the following information: a modulation and coding scheme for the first data or a size of a time domain resource for the first data. According to the solution in which the first indication information indicates the modulation and coding scheme or the size of the time domain resource for the first data, because the monitoring cycle of the first search space is greater than the monitoring cycle of the second search space, high redundancy of transmission of scheduling signaling caused by sending of the signaling in the second search space can be avoided. The solution in which the second indication information indicates the modulation and coding scheme or the size of the time domain resource for the first data is used, so that the network device can determine, before data transmission and based on either of a current channel condition and a data packet size of to-be-transmitted data, a modulation and coding scheme or a size of a time domain resource for the data. For example, when a channel condition is good or a data packet is short, a modulation and coding scheme with higher spectral efficiency or a smaller data time domain resource may be used, to improve system efficiency.

In a possible design, the first indication information further includes at least one of the following information: a downlink control signaling format identifier, a carrier identifier, a bandwidth part identifier, a redundancy version, a new data identifier, a hybrid automatic repeat request (hybrid automatic repeat request, HARQ) process number, a downlink assignment index, a physical uplink control channel (physical uplink control channel, PUCCH) resource identifier, a transmit power command of a PUCCH, a physical downlink shared channel (physical downlink shared channel, PDSCH) HARQ feedback timing identifier, a virtual resource block (virtual resource block, VRB) to physical resource block (physical resource block, PRB) mapping mode, a PRB bundling size identifier, a rate matching identifier, a zero power channel state information-reference signal (zero power channel state information-reference signal, ZP CSI-RS) trigger, an antenna port, a transmission configuration identification, a sounding reference signal (sounding reference signal, SRS) request, and demodulation reference signal (demodulation reference signal, DMRS) sequence initialization.

In a possible design, a size of the second indication information is less than a size of the first indication information.

In this application, the first indication information in the monitoring cycle of the first search space indicates information that changes slowly, to reduce the size of the second indication information in the monitoring cycle of the second search space, reduce redundancy of transmission of scheduling signaling, improve network transmission efficiency, and reduce power consumption of the terminal device. The second indication information in the monitoring cycle of the second search space indicates information that changes fast, to ensure timeliness of the transmission of the scheduling signaling, and improve system efficiency. The size of the second indication information is less than the size of the first indication information, to reduce power consumption of detecting the scheduling signaling by the terminal device.

In a possible design, the second indication information is carried through a sequence or a physical downlink control channel.

In this application, the sequence is used to carry the second indication information, to obtain better transmission reliability.

In this application, the physical downlink control channel is used to carry the second indication information, to carry more information.

In a possible design, the method further includes: receiving configuration information, where the configuration information is used to configure either of the monitoring cycle of the first search space and the monitoring cycle of the second search space.

In this application, either of the monitoring cycle of the first search space and the monitoring cycle of the second search space may be configured based on a transmission cycle of communication data, a communication channel environment, mobility of the terminal device, a network load status, power consumption of the terminal device, and the like, to reduce power consumption of the terminal device as much as possible on the basis of meeting a data transmission requirement.

In a possible design, the configuration information includes at least one of the following information: a start location of the first search space, a size of a frequency domain resource of the first search space, a location of the frequency domain resource of the first search space, continuous monitoring duration of the first search space, or a location of a monitoring symbol in a monitoring slot of the first search space.

In a possible design, the configuration information further includes at least one of the following information: a start location of the second search space, a size of a frequency domain resource of the second search space, a location of the frequency domain resource of the second search space, continuous monitoring duration of the second search space, an interval slot between two adjacent monitoring slots in the second search space, or a location of a monitoring symbol in a monitoring slot of the second search space.

In this application, the interval slot between the two adjacent monitoring slots in the second search space is added to the configuration information, to reduce duration in which the terminal device monitors the second indication information within the continuous monitoring duration, so as to further reduce power consumption of the terminal device.

In a possible design, the method further includes: The continuous monitoring duration of the first search space is less than the continuous monitoring duration of the second search space. This method can further reduce power consumption for monitoring the scheduling signaling by the terminal device.

In a possible design, a frequency domain resource for communicating the second indication information is the same as the frequency domain resource for the first data, or a size of a frequency domain resource for communicating the second indication information is less than a size of the frequency domain resource for the first data.

In this application, the frequency domain resource for communicating the second indication information is the same as the frequency domain resource for the first data. In this case, the second indication information and the first data may share a reference signal used for demodulation, to improve channel estimation performance. Alternatively, the sequence that carries the second indication information may be used as a reference signal used for data demodulation, to reduce transmission redundancy of an additional reference signal used for data demodulation, or improve channel estimation performance.

In this application, a size of the frequency domain resource for communicating the second indication information is less than a size of a frequency domain resource for receiving the data, to reduce monitoring power consumption of the terminal device.

In a possible design, the frequency domain resource of the second search space is the same as the frequency domain resource of the first search space, or the size of the frequency domain resource of the second search space is less than the size of the frequency domain resource of the first search space.

In this application, the frequency domain resource of the second search space is the same as the frequency domain resource of the first search space, to avoid complexity increase caused by frequent bandwidth part switching when the terminal device monitors the control signaling.

In this application, the size of the frequency domain resource of the second search space is less than the size of the frequency domain resource of the first search space, to reduce monitoring power consumption for monitoring the second indication information by the terminal device.

In a possible design, the method further includes: adjusting either of the start location of the second search space and the monitoring cycle of the second search space based on a slot location in which the second indication information is received in the second search space.

In this application, either of a start location of an afterward second search space and a monitoring cycle of the second search space is adjusted based on the slot location in which the second indication information is received in the second search space. This is convenient for a system to more accurately set, based on transmission duration for the data, duration for monitoring the second indication information, thereby reducing monitoring power consumption for monitoring the second indication information by the terminal device.

In a possible design, the method further includes: receiving third indication information, where the third indication information indicates either of the start location of the second search space and the monitoring cycle of the second search space.

In this application, the third indication information indicates either of a start location of an afterward second search space and a monitoring cycle of the second search space. This is convenient for a system to more accurately set, based on transmission duration for the first data, duration for monitoring the second indication information, thereby reducing monitoring power consumption for monitoring the second indication information by the terminal device.

In a possible design, the method further includes: stopping monitoring the second indication information in remaining continuous monitoring duration in a current monitoring cycle of the second search space.

In this application, after obtaining the second indication information through monitoring, the terminal device stops monitoring the second indication information in the remaining continuous monitoring duration in the current monitoring cycle of the second search space, to reduce monitoring power consumption for monitoring the second indication information by the terminal device.

According to a second aspect, this application provides a resource indication method. The method may be performed by a terminal device or a chip used in a terminal device. The following provides descriptions by using an example in which the method is performed by the terminal device. The method includes: The terminal device monitors and receives fourth indication information in a third search space, where the fourth indication information indicates a frequency domain resource for second data. The terminal device sends fifth indication information at a first transmission opportunity, where the fifth indication information indicates a start transmission moment for the second data, and a monitoring cycle of the third search space is greater than a transmission opportunity cycle of the first transmission opportunity. The terminal device sends the second data based on the frequency domain resource and the start transmission moment.

In this application, the terminal device receives the fourth indication information sent by a network device in the monitoring cycle of the third search space, to allocate in advance an uplink transmission resource that can be used by the terminal device. The monitoring cycle of the third search space is greater than the transmission opportunity cycle of the first transmission opportunity. This avoids a problem that signaling transmission redundancy is high because the terminal device repeatedly sends, at the first transmission opportunity, a frequency domain resource that is expected to be used for data transmission. According to the solution of this application, a quantity of times of sending frequency domain resource information can be reduced, to reduce redundancy of transmission of scheduling signaling, improve network transmission efficiency, and reduce power consumption of the terminal device. After data arrives, the terminal device sends the fifth indication information in the transmission cycle of the first transmission opportunity, to notify the network device of a time domain resource for data transmission that is expected by the terminal device in this case, so as to avoid a problem that a transmission resource is wasted to reduce a delay.

In a possible design, the fourth indication information further indicates at least one of the following information: a modulation and coding scheme for the second data or a size of a time domain resource for the second data. Alternatively, the fifth indication information further indicates at least one of the following information: a modulation and coding scheme for the second data or a size of a time domain resource for the second data. According to the solution in which the fourth indication information indicates the modulation and coding scheme or the size of the time domain resource for the second data, because the monitoring cycle of the third search space is greater than the transmission opportunity cycle of the first transmission opportunity, high redundancy of transmission of scheduling signaling caused by cyclic sending of the signaling at the transmission opportunity cycle of the first transmission opportunity can be avoided. The solution in which the fifth indication information indicates the modulation and coding scheme or the size of the time domain resource for the second data is used, so that the terminal device can determine, before data transmission and based on either of a current channel condition and a data packet size of to-be-transmitted data, a modulation and coding scheme or a size of a time domain resource for the data. For example, when a channel condition is good or a data packet is short, a modulation and coding scheme with higher spectral efficiency or a smaller data time domain resource may be used, to improve system efficiency.

In a possible design, the fifth indication information further includes at least one of the following information: a downlink control signaling format identifier, a carrier identifier, an uplink carrier identifier or a supplementary uplink carrier identifier, a bandwidth part identifier, a frequency hopping flag, a redundancy version, a new data identifier, a HARQ process number, a downlink assignment index DAI, an SRS resource identifier, precoding information and a quantity of layers, an antenna port, an SRS request, a CSI request, code block group (code block group, CBG) transmission information, an association relationship between a phase tracking reference signal (phase tracking reference signal, PTRS) and a DMRS, a beta offset (beta_offset) identifier, and DMRS sequence initialization.

In a possible design, the fifth indication information is carried through a sequence, a physical uplink control channel, or a physical uplink shared channel.

In this application, the sequence is used to carry the fifth indication information, to obtain better transmission reliability.

In this application, the physical uplink control channel or the physical uplink shared channel is used to carry the fifth indication information, to carry more information.

In a possible design, the method further includes: receiving configuration information, where the configuration information is used to configure either of the monitoring cycle of the third search space and the transmission opportunity cycle of the first transmission opportunity.

In this application, either of the monitoring cycle of the third search space and the transmission opportunity cycle of the first transmission opportunity may be configured based on a transmission cycle of communication data, a communication channel environment, mobility of the terminal device, a network load status, power consumption of the terminal device, and the like, to reduce power consumption of the terminal device as much as possible on the basis of meeting a data transmission requirement.

In a possible design, the configuration information includes at least one of the following information: a start location of the third search space, a size of a frequency domain resource of the third search space, a location of the frequency domain resource of the third search space, continuous monitoring duration of the third search space, or a location of a monitoring symbol in a monitoring slot of the third search space.

In a possible design, the configuration information further includes at least one of the following information: a start location of the first transmission opportunity, a size of a frequency domain resource of the first transmission opportunity, a location of the frequency domain resource of the first transmission opportunity, duration of a transmission opportunity slot of the first transmission opportunity, an interval slot between two adjacent transmission opportunity slots in a cycle of the first transmission opportunity, or a symbol location in which a transmission opportunity in a transmission slot of the first transmission opportunity is located.

In a possible design, the method further includes: The continuous monitoring duration of the third search space is less than the duration of the transmission opportunity slot of the first transmission opportunity. This method can further reduce power consumption for monitoring the scheduling signaling by the terminal device.

In a possible design, a frequency domain resource for the fifth indication information is the same as the frequency domain resource for the second data, or a size of a frequency domain resource for the fifth indication information is less than a size of the frequency domain resource for the second data.

In this application, the frequency domain resource for communicating the fifth indication information is the same as the frequency domain resource for the second data. In this case, the fifth indication information and the data may share a reference signal used for demodulation, to improve channel estimation performance. Alternatively, the sequence that carries the fifth indication information may be used as a reference signal used for data demodulation, to reduce transmission redundancy of an additional reference signal used for data demodulation, or improve channel estimation performance.

In this application, a size of the frequency domain resource for communicating the fifth indication information is less than a size of the frequency domain resource for the second data, so that power spectral density for sending the fifth indication information by the terminal device can be improved, and transmission performance of the fifth indication information can be improved.

According to a third aspect, this application provides a resource indication method. The method may be performed by a network device or a chip used in a network device. The following provides descriptions by using an example in which the method is performed by the network device. The method includes: sending first indication information in a first search space, where the first indication information indicates a frequency domain resource for first data; sending second indication information in a second search space, where the second indication information indicates a start transmission moment for the first data, and a monitoring cycle of the first search space is greater than a monitoring cycle of the second search space; and sending the first data to a terminal device based on the frequency domain resource and the start transmission moment.

In a possible design, the first indication information further indicates a modulation and coding scheme for the first data, and/or indicates a size of a time domain resource for the first data; or the second indication information further indicates a modulation and coding scheme for the first data, and/or indicates a size of a time domain resource for the first data.

In a possible design, the first indication information further includes at least one of the following information: a downlink control signaling format identifier, a carrier identifier, a bandwidth part identifier, a redundancy version, a new data identifier, a HARQ process number, a downlink assignment index, a PUCCH resource identifier, a transmit power command of a PUCCH, a PDSCH HARQ feedback timing identifier, a VRB-to-PRB mapping mode, a PRB bundling size identifier, a rate matching identifier, a ZP CSI-RS trigger, an antenna port, a transmission configuration identification, an SRS request, and DMRS sequence initialization.

In a possible design, a size of the second indication information is less than a size of the first indication information.

In a possible design, the second indication information is carried through a sequence or physical downlink control signaling.

In this application, the sequence is used to carry the second indication information, to obtain better transmission reliability.

In this application, the physical downlink control channel is used to carry the second indication information, to carry more information.

In a possible design, the method further includes: sending configuration information, where the configuration information is used to configure either of the monitoring cycle of the first search space and the monitoring cycle of the second search space.

In a possible design, the configuration information includes at least one of the following information: a start location of the first search space, a size of a frequency domain resource of the first search space, a location of the frequency domain resource of the first search space, continuous monitoring duration of the first search space, or a location of a monitoring symbol in a monitoring slot of the first search space.

In a possible design, the configuration information further includes at least one of the following information: a start location of the second search space, a size of a frequency domain resource of the second search space, a location of the frequency domain resource of the second search space, continuous monitoring duration of the second search space, an interval slot between two adjacent monitoring slots in the second search space, or a location of a monitoring symbol in a monitoring slot of the second search space. In this application, the interval slot between the two adjacent monitoring slots in the second search space is added to the configuration information, to reduce duration in which the terminal monitors second signaling within the continuous monitoring duration can be reduced, so as to further reduce power consumption of the terminal device.

In a possible design, the method further includes: The continuous monitoring duration of the first search space is less than the continuous monitoring duration of the second search space. This method can further reduce power consumption for monitoring the scheduling signaling by the terminal device.

In a possible design, a frequency domain resource for the second indication information is the same as the frequency domain resource for the first data, or a size of a frequency domain resource for the second indication information is less than a size of the frequency domain resource for the first data.

In a possible design, the frequency domain resource of the second search space is the same as the frequency domain resource of the first search space, or the size of the frequency domain resource of the second search space is less than the size of the frequency domain resource of the first search space.

In a possible design, the method further includes: determining either of the start location of the second search space and the monitoring cycle of the second search space based on a slot location in which the second indication information is sent in the second search space.

In a possible design, the method further includes: sending third indication information, where the third indication information indicates either of the start location of the second search space and the monitoring cycle of the second search space.

For beneficial effects of any possible implementation of the third aspect, refer to the related description of the first aspect. Details are not described herein again.

According to a fourth aspect, this application provides a communication method. The method may be performed by a network device or a chip used in a network device. The following provides descriptions by using an example in which the method is performed by the network device. The method includes: sending fourth indication information in a third search space, where the fourth indication information indicates a frequency domain resource for second data; monitoring and receiving fifth indication information at a first transmission opportunity, where the fifth indication information indicates a start transmission moment for the second data, and a monitoring cycle of the third search space is greater than a transmission opportunity cycle of a first transmission opportunity space; and receiving the second data based on the frequency domain resource and the start transmission moment. Therefore, a problem that a transmission resource is wasted to reduce a delay can be avoided.

In this application, the network device allocates in advance, based on the fourth indication information, an uplink transmission resource to be used by a terminal device. However, to avoid waste of a transmission resource, the terminal device uses the uplink transmission resource only when there is data to be transmitted, and the terminal device notifies the network device by sending the fifth indication information after the data arrives. In addition, uplink data is sent on time domain resources indicated by the fourth indication information and the fifth indication information, to avoid a problem that the transmission resource is wasted to reduce a delay.

In a possible design, the fourth indication information further indicates a modulation and coding scheme for the second data, and/or a size of a time domain resource for the second data; or the fifth indication information further indicates a modulation and coding scheme for the second data, and/or a size of a time domain resource for the second data.

In a possible design, the first indication information further includes at least one of the following information: a downlink control signaling format identifier, a carrier identifier, an uplink carrier identifier or a supplementary uplink carrier identifier, a bandwidth part identifier, a frequency hopping flag, a redundancy version, a new data identifier, a HARQ process number, a downlink assignment index DAI, an SRS resource identifier, precoding information and a quantity of layers, an antenna port, an SRS request, a CSI request, CBG transmission information, an association relationship between a PTRS and a DMRS, a beta offset identifier, and DMRS sequence initialization.

In a possible design, the fifth indication information is carried through a sequence, a physical uplink control channel, or a physical uplink shared channel.

In a possible design, the method further includes: sending configuration information, where the configuration information is used to configure either of the monitoring cycle of the third search space and the transmission opportunity cycle of the first transmission opportunity.

In a possible design, the configuration information includes at least one of the following information: a start location of the third search space, a size of a frequency domain resource of the third search space, a location of the frequency domain resource of the third search space, continuous monitoring duration of the third search space, or a location of a monitoring symbol in a monitoring slot of the third search space.

In a possible design, the configuration information further includes at least one of the following information: a start location of the first transmission opportunity, a size of a frequency domain resource of the first transmission opportunity, a location of the frequency domain resource of the first transmission opportunity, duration of a transmission opportunity slot of the first transmission opportunity, an interval slot between two adjacent transmission opportunity slots in a cycle of the first transmission opportunity, or a symbol location in which a transmission opportunity in a transmission slot of the first transmission opportunity is located.

In a possible design, the method further includes: The continuous monitoring duration of the third search space is less than the duration of the transmission opportunity slot of the first transmission opportunity. This method can further reduce power consumption for monitoring the scheduling signaling by the terminal device.

In a possible design, a frequency domain resource for the fifth indication information is the same as the frequency domain resource for the second data, or a size of a frequency domain resource for the fifth indication information is less than a size of the frequency domain resource for the second data.

For beneficial effects of any possible implementation of the fourth aspect, refer to the related description of the second aspect. Details are not described herein again.

According to a fifth aspect, a communication apparatus is provided. For beneficial effects, refer to the description of the first aspect. Details are not described herein again. The communication apparatus has a function of implementing behavior in the method example in the first aspect. The function may be implemented by hardware, or may be implemented by hardware executing corresponding software. The hardware or the software includes one or more modules corresponding to the foregoing function.

In a possible design, the communication apparatus includes a processing module and a transceiver module.

The processing module is configured to control the transceiver module to: monitor and receive first indication information in a first search space, where the first indication information indicates a frequency domain resource for first data; and monitor and receive second indication information in a second search space, where the second indication information indicates a start transmission moment for the first data, and a monitoring cycle of the first search space is greater than a monitoring cycle of the second search space. The processing module is further configured to: determine the frequency domain resource and the start transmission moment based on the first indication information and the second indication information, and control the transceiver module to receive the first data. These modules may perform corresponding functions in the method example in the first aspect. For details, refer to the detailed description in the method example. Details are not described herein again.

According to a sixth aspect, a communication apparatus is provided. For beneficial effects, refer to the description of the second aspect. Details are not described herein again. The communication apparatus has a function of implementing behavior in the method example in the second aspect. The function may be implemented by hardware, or may be implemented by hardware executing corresponding software. The hardware or the software includes one or more modules corresponding to the foregoing function.

In a possible design, the communication apparatus includes a processing module and a transceiver module. The processing module is configured to control the transceiver module to monitor and receive fourth indication information in a third search space, where the fourth indication information indicates a frequency domain resource for second data. The transceiver module is configured to send fifth indication information at a first transmission opportunity, where the fifth indication information indicates a start transmission moment for the second data, and a monitoring cycle of the third search space is greater than a transmission opportunity cycle of a first transmission opportunity space. The processing module is further configured to control, based on the frequency domain resource and the start transmission moment, the transceiver module to send the second data. These modules may perform corresponding functions in the method example in the second aspect. For details, refer to the detailed description in the method example. Details are not described herein again.

According to a seventh aspect, a communication apparatus is provided. For beneficial effects, refer to the description of the third aspect. Details are not described herein again. The communication apparatus has a function of implementing behavior in the method example in the third aspect. The function may be implemented by hardware, or may be implemented by hardware executing corresponding software. The hardware or the software includes one or more modules corresponding to the foregoing function.

In a possible design, the communication apparatus includes a processing module and a transceiver module. The transceiver module is configured to: send first indication information in a first search space, where the first indication information indicates a frequency domain resource for first data; and send second indication information in a second search space, where the second indication information indicates a start transmission moment for the first data, and a monitoring cycle of the first search space is greater than a monitoring cycle of the second search space. The processing module is configured to control, based on the frequency domain resource and the start transmission moment, the transceiver module to send the first data. These modules may perform corresponding functions in the method example in the third aspect. For details, refer to the detailed description in the method example. Details are not described herein again.

According to an eighth aspect, a communication apparatus is provided. For beneficial effects, refer to the description of the fourth aspect. Details are not described herein again. The communication apparatus has a function of implementing behavior in the method example in the fourth aspect. The function may be implemented by hardware, or may be implemented by hardware executing corresponding software. The hardware or the software includes one or more modules corresponding to the foregoing function.

In a possible design, the communication apparatus includes a processing module and a transceiver module. The transceiver module is configured to send fourth indication information in a third search space, where the fourth indication information indicates a frequency domain resource for second data. The processing module is configured to control the transceiver module to monitor and receive fifth indication information at a first transmission opportunity, where the fifth indication information indicates a start transmission moment for the second data, and a monitoring cycle of the third search space is greater than a transmission opportunity cycle of a first transmission opportunity space. The processing module is further configured to control, based on the frequency domain resource and the start transmission moment, the transceiver module to receive the second data. These modules may perform corresponding functions in the method example in the fourth aspect. For details, refer to the detailed description in the method example. Details are not described herein again.

According to a ninth aspect, a communication apparatus is provided. The communication apparatus may be the terminal device in the foregoing method embodiments, or a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus performs the methods performed by the terminal device in the foregoing method embodiments.

According to a tenth aspect, a communication apparatus is provided. The communication apparatus may be the network device in the foregoing method embodiments, or a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus performs the methods performed by the network device in the foregoing method embodiments.

According to an eleventh aspect, a computer program product is provided. The computer program product includes computer program code. When the computer program code is run, the methods performed by the terminal device in the foregoing aspects are performed.

According to a twelfth aspect, a computer program product is provided. The computer program product includes computer program code. When the computer program code is run, the methods performed by the network device in the foregoing aspects are performed.

According to a thirteenth aspect, this application provides a chip system. The chip system includes a processor configured to implement functions of the terminal device in the methods in the foregoing aspects. In a possible design, the chip system further includes a memory, configured to store program instructions and/or data. The chip system may include a chip, or may include a chip and another discrete component.

According to a fourteenth aspect, this application provides a chip system. The chip system includes a processor configured to implement functions of the network device in the methods in the foregoing aspects. In a possible design, the chip system further includes a memory, configured to store program instructions and/or data. The chip system may include a chip, or may include a chip and another discrete component.

According to a fifteenth aspect, this application provides a computer-readable storage medium. The computer-readable storage medium stores a computer program. When the computer program is run, the methods performed by the terminal device in the foregoing aspects are implemented.

According to a sixteenth aspect, this application provides a computer-readable storage medium. The computer-readable storage medium stores a computer program. When the computer program is run, the methods performed by the network device in the foregoing aspects are implemented.

## BRIEF DESCRIPTION OF DRAWINGS

FIG. 1 is a schematic diagram of a communication system;

FIG. 2 is a schematic flowchart of a resource indication method according to an embodiment of this application;

FIG. 3 is a schematic diagram of a resource configuration manner for a sequence for carrying second indication information according to an embodiment of this application;

FIG. 4 is a schematic diagram of another resource configuration manner for a sequence for carrying second indication information according to an embodiment of this application;

FIG. 5 is a schematic diagram of a relationship between a monitoring cycle of a first search space and a monitoring cycle of a second search space according to an embodiment of this application;

FIG. 6 is a schematic diagram of a configuration manner for a second search space according to an embodiment of this application;

FIG. 7 is a schematic diagram of a configuration manner for a monitoring period interval for a second search space according to an embodiment of this application;

FIG. 8 is a schematic diagram of a monitoring manner for second indication information according to an embodiment of this application;

FIG. 9 is a schematic diagram of another monitoring manner for second indication information according to an embodiment of this application;

FIG. 10 is a schematic diagram of still another monitoring manner for second indication information according to an embodiment of this application;

FIG. 11 is a schematic flowchart of another resource indication method according to an embodiment of this application;

FIG. 12 is a schematic diagram of a configuration manner for a first transmission opportunity according to an embodiment of this application;

FIG. 13 is a schematic flowchart of still another resource indication method according to an embodiment of this application;

FIG. 14 is a schematic flowchart of yet another resource indication method according to an embodiment of this application;

FIG. 15 is a schematic diagram of a structure of a communication apparatus according to an embodiment of this application;
FIG. 16 is a schematic diagram of a structure of another communication apparatus according to an embodiment of this application;
FIG. 17 is a schematic diagram of a simplified structure of a communication apparatus according to an embodiment of this application; and
FIG. 18 is a schematic diagram of a simplified structure of a terminal device according to an embodiment of this application.

## DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) mobile communication system, a new radio (new radio, NR) system or another evolved communication system, and a next-generation mobile communication system of the 5G communication system.

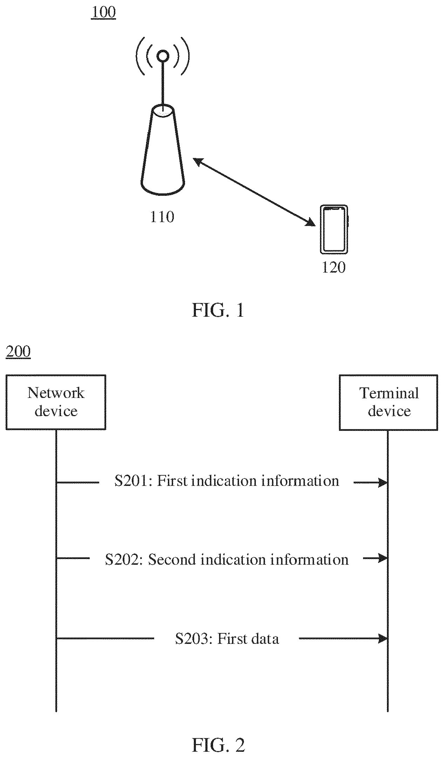

For ease of understanding of embodiments of this application, a communication system applicable to embodiments of this application is first described in detail with reference to FIG. 1.

FIG. 1 shows a communication system 100. As shown in FIG. 1, the communication system 100 includes at least two communication devices, for example, a scheduling node 110 and at least one scheduled node 120. Data communication may be performed between the scheduling node 110 and the at least one scheduled node 120 through a wireless connection. Specifically, the scheduling node 110 may send downlink data to the scheduled node 120. Alternatively, the scheduled node 120 may send uplink data to the scheduling node 110.

The scheduling node in the foregoing communication system is configured to: determine a resource and a mode for data transmission, and notify the scheduled node of a determined resource solution and the determined data transmission mode. The scheduled node is configured to perform, based on an indication of the scheduling node, data transmission by using a resource allocation scheme and the data transmission mode that are determined by the scheduling node. Data transmission herein includes data receiving and data sending.

The scheduling node in embodiments of this application may be an access network device or a radio access network device. The scheduling node may be a transmission reception point (transmission reception point, TRP), may be an evolved NodeB (evolved NodeB, eNB or eNodeB) in an LTE system, may be a home base station (for example, home evolved NodeB, or home NodeB, HNB) or a baseband unit (baseband unit, BBU), or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, may be an access point (access point, AP) in a WLAN, or may be a gNB in an NR system. Alternatively, the scheduling node may be a metro base station, a micro base station, a pico base station, a femto base station, or the like, or a terminal device with a scheduling function. This is not limited in this application.

In a network structure, a network device may include a central unit (centralized unit, CU) node or a distributed unit (distributed unit, DU) node, may be a radio access network (radio access network, RAN) device including a CU node and a DU node, or may be a RAN device that includes a control plane CU node (CU-CP node), a user plane CU node (CU-UP node), and a DU node.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmit power, and are applicable to providing high-rate data transmission services.

A scheduled node in embodiments of this application may be a terminal device, also referred to as user equipment (User Equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a user terminal, a terminal, a wireless communication device, a user agent, a user device, or the like.

The terminal device may be a device that provides voice/data connectivity for a user, for example, a handheld device or a vehicle-mounted device that has a wireless connection function. Currently, some terminal devices, for example, include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in the 5G network, a terminal device in the future evolved public land mobile network (public land mobile network, PLMN), or the like. This is not limited in this application.

By way of example rather than limitation, in this application, the terminal device may be a terminal device in an internet of things (Internet of things, IoT) system. The internet of things is an important part in development of future information technologies. A main technical characteristic of the internet of things is to connect an object to a network by using a communication technology, to implement an intelligent network for human-machine interconnection and thing-thing interconnection. For example, the terminal device in embodiments of this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also can implement powerful functions through software support, data interaction, and cloud interaction. Generic wearable intelligent devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

By way of example rather than limitation, in embodiments of this application, the terminal device may alternatively be a terminal device in machine type communication (machine type communication, MTC). In addition, the terminal apparatus may alternatively be a vehicle-mounted module, a vehicle-mounted assembly, a vehicle-mounted component, a vehicle-mounted chip, an on-board unit, or the like that is built in a vehicle as one or more components or units. The vehicle uses the vehicle-mounted module, the vehicle-mounted assembly, the vehicle-mounted component, the vehicle-mounted chip, the on-board unit, or the like that is built in the vehicle, to implement the method provided in this application. Therefore, embodiments of this application may also be applied to the internet of vehicles, for example, a vehicle to everything (vehicle to everything, V2X) technology, a long term evolution-vehicle (long term evolution-vehicle, LTE-V) technology, or a vehicle-to-vehicle (vehicle-to-vehicle, V2V) technology.

It should be understood that FIG. 1 is merely a simplified schematic diagram of an example for ease of understanding. The communication system 100 may further include another device that is not shown in FIG. 1.

In a wireless communication system, to properly allocate radio resources and meet a requirement of each communication node, a scheduling node is usually responsible for determining a radio resource allocation status, and notifying a scheduled node of a resource allocation result. The scheduled node performs communication based on an allocated resource. Radio resource allocation includes one or a combination of more of a time domain, a frequency domain, a space domain, a code domain, and an orbital angular momentum domain. Radio resource scheduling is classified into dynamic grant and semi-persistent scheduling based on a speed of the radio resource allocation. During dynamic grant, the scheduling node determines, at each transmission duration interval (the transmission interval may be one or more scheduling units, and the scheduling unit may be one or more symbols, one or more slots, one or more subframes, one or more frames, one or more superframes, or from several microseconds to several milliseconds to dozens of milliseconds or even several seconds) a radio resource used by the scheduled node, and notifies, by using physical layer control signaling, the scheduled node of the radio resource to be used by the scheduled node. During semi-persistent scheduling, the scheduling node notifies, by using higher layer control signaling such as radio resource control (radio resource control, RRC) signaling, the scheduled node of a resource to be used by the scheduled node. Once the resource is allocated and activated for use, the resource is used in a mode indicated by higher layer signaling unless the resource is reconfigured through the higher layer signaling.

For example, during dynamic grant, the radio resource is allocated and carried on a physical downlink control channel (physical downlink control channel, PDCCH), and during semi-persistent scheduling, a radio resource is allocated and carried on the radio resource control RRC signaling. During dynamic grant, because physical layer control signaling needs to be sent each time of resource allocation, signaling redundancy (overhead) are high. During semi-persistent scheduling, after resource allocation signaling is sent once, resources are used based on allocated resources within a period of time, and signaling does not need to be sent again. Therefore, signaling redundancy is low. The dynamic grant can perform scheduling adjustment at each transmission duration interval, and has higher flexibility. Therefore, the dynamic grant is usually used for some burst services, for example, a web page browsing service. Because scheduling adjustment is not performed for a long time, the semi-persistent scheduling is usually used for cyclic services such as a voice service. In the 5G system, SPS is used for downlink semi-persistent scheduling. For uplink semi-persistent scheduling, SPS is also referred to as a CG or no scheduling (grant free).

For example, services of some 3D visual interaction systems in application scenarios such as virtual reality (virtual reality, VR), augmented reality (augmented reality, AR), mixed reality (mixed reality, MR), and cloud gaming (cloud gaming) (VR, AR, MR, and cloud gaming are collectively referred to as extended reality (extended reality, XR)) have a cycle characteristic when a signal source is generated, that is, an XR service is a video transmission service that is cyclically transmitted at a frame rate. The frame rate refers to a quantity of frames included in a video per second, and a unit is a frame per second (frame per second, fps), and a cycle is a reciprocal of the frame rate. It can be understood that a minimum frame rate of a video is generally set to 24 fps. When the frame rate is lower than 24 fps, human eyes experience obvious frame freezing. For a video with a slow image change, the frame rate is generally 30 fps. For a video with a sharp image change, the frame rate is generally 60 fps. Currently, a common frame rate configuration in the XR service is 30 fps, 60 fps, 90 fps, or 120 fps. A frame rate of 60 fps is used as an example, and a cycle of a video frame is 1/60 = 16.67 ms. However, due to factors such as rendering, source coding, and routing path selection, the XR service may arrive earlier than an expected arrival moment, or may arrive later than an expected arrival moment. This phenomenon may be referred to as jitter. A value of the jitter is compliant with a specific probability distribution in mathematical statistics. The probability distribution may be a Gaussian distribution or a truncated Gaussian distribution, may be an exponential distribution, may be a Poisson distribution, or may be another statistical distribution. In addition, a jitter value usually has a specific range. For example, in a 3GPP evaluation model, a jitter range of a video frame is [-4 ms, 4 ms].

With reference to the foregoing example, data transmission at an application layer of the XR service needs a large amount of resources, and an average rate of data packets of the XR service may reach 30 million bits per second (Mbps), 45 Mbps, or even 60 Mbps. 30 Mbps and 60 fps are used as an example. An average packet size of each video frame is 62500 bytes, and the packet size also is compliant with a probability distribution. For example, in a 3GPP evaluation model, a standard deviation of the XR service is a product obtained by multiplying the average packet size by 10.5%, namely, 6563 bytes. A maximum packet size is a product obtained by multiplying the average packet size by 150%, namely, 93750 bytes. A minimum packet size is a product obtained by multiplying the average packet size by 50%, namely, 31250 bytes, namely, half of the average packet size. To ensure extremely smooth user experience, the XR service is sensitive to a rate and a delay of a data packet. For a typical VR/AR service type, a packet delay budget (packet delay budget, PDB) is 10 ms, where the PDB is a time threshold from a moment at which a data packet or a video frame arrives at a scheduling node to a moment at which a scheduled node successfully receives the data packet or video frame.

Because the XR service has the cycle characteristic, the XR service may use a semi-persistent scheduling mode. For example, for an XR service of 60 fps, a resource with a cycle of 16.67 ms may be allocated to the XR service. This scheduling mode can save signaling overheads. However, there is jitter in arrival of an XR service. Therefore, if resources are allocated based on an expected arrival cycle of the XR service, if the XR service arrives much earlier than an expected arrival moment, it is necessary to wait for a period of time until a radio resource allocated through semi-persistent scheduling can transmit data. If the radio resource allocated through the semi-persistent scheduling has been missed when the XR service arrives later than an expected arrival moment, the radio resource that is allocated through the semi-persistent scheduling and that corresponds to the service is not used and wasted, and transmission of late-arrival data can only be delayed to a radio resource for next XR in semi-persistent scheduling. This increases a delay of the XR service. In addition, even if a subsequent XR service arrives earlier than an expected moment, because a radio resource corresponding to the XR service needs to be used to transmit the data that arrives late before. As a result, transmission of a current XR service is also postponed to a radio resource corresponding to next XR.

In some embodiments, to avoid a problem that a data transmission delay of an XR service increases due to the semi-persistent scheduling, the XR service is scheduled in a dynamic grant mode. During the dynamic grant, an allocated resource needs to be transmitted through physical layer control signaling each time. The control signaling includes signaling indicating radio resource information, such as a bandwidth part identifier, a frequency domain resource, a VRB-to-PRB mapping mode, a time domain resource identifier, a PRB bundling size identifier, and a rate matching identifier, signaling indicating a modulation and coding scheme, such as a modulation and coding scheme, a new data representation, and a redundancy version, HARQ-related signaling such as a HARQ process number and a downlink allocation index, signaling related to a plurality of antennas, and the like. In addition, when the XR service is scheduled in the dynamic grant mode, a scheduled node does not know whether there is signaling sent to the scheduled node in each transmission interval, and therefore needs to monitor a PDCCH at any time to obtain physical layer control signaling sent to the scheduled node. If failing to detect the PDCCH, the scheduled node considers that a scheduling node does not send the control signaling to the scheduled node. If successfully obtaining the PDCCH through detecting, the scheduled node determines, based on content indicated by PDCCH signaling, a resource and a transmission mode that are required for communication. This process is referred to as a PDCCH blind detection process.

In conclusion, when the XR service is dynamically scheduled, a total quantity of bits of the control signaling may be as high as dozens to hundreds of bits, and the XR services are dense. If a network device sends the physical layer control signaling for each XR service transmission, there are excessive resources used by the scheduling node to transmit the physical layer control signaling. As a result, resources used by the scheduling node to transmit data are reduced, and efficiency is reduced. In addition, the scheduled node needs to perform PDCCH blind detection each time according to a PDCCH signaling size of dozens to hundreds of bits. A larger PDCCH signaling size indicates higher power consumption spent by the scheduled node on PDCCH blind detection.

In view of this, embodiments of this application provide a resource indication method and a communication apparatus. A terminal device receives first indication information sent by a network device in a monitoring cycle of a first search space. Because the monitoring cycle of the first search space is greater than a monitoring cycle of a second search space, high redundancy of transmission of scheduling signaling caused by repeated sending of a frequency resource in the second search space is avoided. According to the solution of this application, a quantity of times of receiving frequency domain resource information can be reduced, to reduce the redundancy of transmission of the scheduling signaling, improve network transmission efficiency, and reduce power consumption of the terminal device. The terminal device receives second indication information sent by the network device in the monitoring cycle of the second search space. Compared with semi-persistent scheduling, data transmission can be triggered in a timely manner when data arrives, and a waiting delay for data transmission is reduced.

Before the resource indication method provided in this application is described, the following several descriptions are first provided.

First, in embodiments shown in this specification, terms and English acronyms and abbreviations such as search space, monitoring cycle, or physical layer signaling are all examples provided for ease of description, and should not be construed as any limitation on this application. This application does not exclude a possibility of defining another term that can implement a same or similar function in an existing or future protocol.

Second, the terms "first", "second", and various numbers in the following embodiments are merely used for differentiation for ease of description, and are not intended to limit the scope of embodiments of this application. For example, different indication information and different search spaces are distinguished. It should be noted that ordinal numbers such as "first" and "second" used in embodiments of this application are used to distinguish between a plurality of objects, and are not intended to limit a sequence, a time sequence, priorities, or importance of the plurality of objects.

Third, "protocol" in embodiments of this application may be a standard protocol in the communication field, for example, may include an LTE protocol, an NR protocol, and a related protocol applied to a future communication system. This is not limited in this application.

Fourth, "a plurality of" means two or more. "And/Or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c may be singular or plural.

The following describes in detail a resource indication method 200 provided in an embodiment of this application with reference to FIG. 2. The method 200 may be applied to the communication system 100 shown in FIG. 1. However, this embodiment of this application is not limited thereto. In FIG. 2, an example in which a network device as a scheduling node and a terminal device as a scheduled node are used as execution bodies of schematic interaction is used to illustrate the method. However, this application does not limit the execution bodies of the schematic interaction.

FIG. 2 shows the resource indication method 200 according to this embodiment of this application. As shown in FIG. 2, the method 200 may include the following steps.

S201: The network device sends first indication information in a first search space, where the first indication information indicates a frequency domain resource for first data. Correspondingly, the terminal device monitors and receives the first indication information in the first search space.

The first indication information may be communicated through physical layer signaling; or a part of information in the first indication information may be communicated through higher layer signaling, and a part of information in the first indication information may be communicated through physical layer signaling. It may be understood that a sum of the part of information communicated through the higher layer signaling and the part of information communicated through the physical layer signaling in the first indication information may be the first indication information, or may be some information in the first indication information. This is not limited in this application.

According to the specifications of 3GPP, physical layer control signaling is sent in a candidate search space on a physical downlink control channel (physical downlink control channel search space candidate). It may be understood that when the first indication information includes the part of information communicated through the higher layer signaling, the network device does not need to send this part of information (the part of information communicated through the higher layer signaling) in the first indication information in the search space.

For example, when the first indication information is communicated through the physical layer signaling, the first indication information may be represented in a specific downlink control information format, or is represented through scrambling based on a specific radio network temporary identity (radio network temporary identity, RNTI).

The first data in this embodiment of this application is downlink data sent by the network device to the terminal device, and may also be referred to as transmission data.

S202: The network device sends second indication information in a second search space, where the second indication information indicates a start transmission moment for the first data. Correspondingly, the terminal device monitors and receives the second indication information in the second search space.

A monitoring cycle of the first search space is greater than a monitoring cycle of the second search space. It should be understood that, when the first indication information is carried through the higher layer signaling, update duration of the first indication information is greater than the monitoring cycle of the second search space.

For example, the network device sends the second indication information in a slot n, and it indicates that, for M slots starting from a slot n+K, the frequency domain resource indicated by the first indication information is used for transmission of the first data. K may be indicated in the first indication information, determined according to a predefined rule, or indicated in the second indication information. M indicates a size of a time domain resource for communicating data, and M may be in a unit of a slot, in a unit of a subframe, in a unit of a mini-slot (mini-slot), in a unit of a sub-slot (sub-slot), or in a unit of a symbol. In this embodiment of this application, an example in which M is in a unit of a slot is used for example for description. M may be indicated in the first indication information, or may be indicated in the second indication information. In this embodiment of this application, both n and K are integers greater than or equal to 0, and M is an integer greater than 0.

For example, the second indication information may indicate not to use or not to activate the frequency domain resource indicated by the first indication information for data transmission. Alternatively, if the network device does not send the second indication information, it indicates that the frequency domain resource indicated by the first indication information is not activated or not used for data transmission.

It should be understood that in this embodiment of this application, monitoring duration of the first search space is less than monitoring duration of the second search space.

S203: The network device sends the first data to the terminal device based on the frequency domain resource and the start transmission moment. Correspondingly, the terminal device receives the first data from the network device based on the frequency domain resource and the start transmission moment.

The network device and the terminal device determine, based on the start transmission moment indicated by the second indication information, a time domain start location at which the frequency domain resource indicated by the first indication information is activated to take effect, so as to determine time-frequency resources for carrying data, so that the network device may send downlink data on the determined time-frequency resources, and the terminal device may receive the downlink data on the determined time-frequency resources.

It may be understood that the time-frequency resources indicated by the first indication information and the second indication information are used only for initial transmission of data. If the terminal device detects that an error occurs in the data, the terminal device sends a non-acknowledgement (non-acknowledgement, NACK) signal to the network device. After receiving the NACK, the network device may start retransmission. For example, signaling for scheduling retransmission may use third indication information different from the first indication information and the second indication information, and a frequency domain resource used for retransmission of data is not limited to the frequency domain resource indicated by the first indication information.

In this embodiment of this application, the terminal device receives the first indication information sent by the network device in the monitoring cycle of the first search space. Because the monitoring cycle of the first search space is greater than the monitoring cycle of the second search space, high redundancy of transmission of scheduling signaling caused by repeated sending of a frequency resource in the second search space is avoided. According to the solution of this application, a quantity of times of receiving frequency domain resource information can be reduced, to reduce the redundancy of transmission of the scheduling signaling, improve network transmission efficiency, and reduce power consumption of the terminal device. The terminal device receives the second indication information sent by the network device in the monitoring cycle of the second search space. Compared with semi-persistent scheduling, data transmission can be triggered in a timely manner when data arrives, and a waiting delay for data transmission is reduced.

For example, the network device may determine, based on one or more pieces of information such as a size of a data packet for communication with the terminal device, channel state information between the network device and the terminal device, and a service load status of the network device, a radio resource that includes the frequency domain resource and that is allocated to the terminal device.

Further, the network device obtains one of an average packet size $N_{average}$, a maximum packet size $N_{max}$, and a minimum packet size $N_{min}$ of a service communicating with the terminal device. The network device obtains a state of a radio channel between the network device and the terminal device, determines a modulation and coding scheme (modulation and coding scheme, MCS) for communicating with the terminal device, and determines a spectral efficiency (spectral efficiency, SE) factor based on the MCS. SE is a product of a modulation order and a bit rate. The network device determines a cycle service factor f based on a current service load status of the network device. If the network device is in a light load state, f may be a large value, so that $f \cdot N_{average}$ is close to or equal to the maximum packet size.

If the network device is in a heavy load situation, f may be set to 1. Therefore, the network device may determine that a resource element (resource element, RE) allocated to the terminal device is approximately $f \cdot N_{average}/SE$, and then consider various pilot signals (for example, a demodulation reference signal, and a channel state information reference signal) and system broadcast signals (for example, a synchronization signal block (synchronization signal block, SSB)) sent by the network device, and current bandwidth information, to finally determine the frequency domain resource allocated to the terminal device.

It should be understood that the first indication information in this embodiment of this application may further include at least one of the following information: a carrier identifier, a bandwidth part identifier, a redundancy version, a new data identifier, a HARQ process number, a downlink assignment index, a PUCCH resource identifier, a transmit power command of a PUCCH, a PDSCH HARQ feedback timing identifier, a VRB-to-PRB mapping mode, a PRB bundling size identifier, a rate matching identifier, a ZP CSI-RS trigger, an antenna port, a transmission configuration identification, an SRS request, and DMRS sequence initialization.

In an optional embodiment, the first indication information further indicates at least one of the following information: a modulation and coding scheme for the first data or a size of a time domain resource for the first data; or the second indication information further indicates at least one of the following information: a modulation and coding scheme for the first data or a size of a time domain resource for the first data.

For example, the first indication information may further indicate the modulation and coding scheme for the first data and the size of the time domain resource for the first data. Alternatively, the first indication information may further indicate the modulation and coding scheme for the first data, and the second indication information further indicates the size of the time domain resource for the first data. Alternatively, the first indication information may further indicate the size of the time domain resource for the first data, and the second indication information further indicates the modulation and coding scheme for the first data. Alternatively, the second indication information may further indicate the modulation and coding scheme for the first data and the size of the time domain resource for the first data.

In this embodiment of this application, the solution in which the first indication information indicates the modulation and coding scheme or the size of the time domain resource for the first data is used. Because the monitoring cycle of the first search space is greater than the monitoring cycle of the second search space, high redundancy of transmission of scheduling signaling caused by sending of the signaling in the second search space can be avoided. The solution in which the second indication information indicates the modulation and coding scheme or the size of the time domain resource for the first data is used, so that the network device can determine, before data transmission and based on either of a current channel condition and a data packet size of to-be-transmitted data, a modulation and coding scheme or a size of a time domain resource for the data. For example, when a channel condition is good or a data packet is short, a modulation and coding scheme with higher spectral efficiency or a smaller data time domain resource may be used, to improve system efficiency.

For example, whether the modulation and coding scheme for the first data and the size of the time domain resource for the first data are indicated in the first indication information or in the second indication information may be determined according to a predefined rule or by being configured by the network device. For example, in an XR service application scenario, an XR service is generally used in a static or low-speed moving scenario. A size of an I frame of a video frame in the XR service is larger than that of a P frame/B frame packet. It may be agreed that a modulation and coding scheme for data is indicated in the first indication information. A size of a time domain resource for the data is indicated in the second indication information. For another example, the network device determines, based on at least one factor of a data packet size, a channel environment, and a network load, whether a modulation and coding scheme for data and a size of a time domain resource for the data are indicated in the first indication information or indicated in the second indication information. For example, if a channel changes slowly, for example, a communication scenario between the network device and the terminal device is a static or low-speed moving scenario, a modulation and coding scheme for data may be indicated in the first indication information. If a channel changes rapidly and a current network device is heavily loaded, a modulation and coding scheme for data is indicated in the second information. For another example, if a size of a data packet changes slightly, a size of a time domain resource for data is indicated in the first indication information. If a size of a data packet changes greatly, a size of a time domain resource for data is indicated in the second indication information.

It may be understood that information indicated in the second indication information may not be indicated in the first indication information. Alternatively, information indicated in the first indication information may not be indicated in the second indication information. It should be further understood that if information required for data transmission is not indicated in neither the first indication information nor the second indication information, a default value may be used. For example, when the indication information sent by the network device does not indicate a size M of a time domain resource for communicating data, the size of the time domain resource for communicating the data is one slot by default. If the indication information sent by the network device does not indicate a quantity of transport blocks for communicating data, the quantity of the transport blocks for communicating the data is 1 by default. With reference to the foregoing example, when the indication information indicates the size of the time domain resource for the first data, if a to-be-transmitted data packet is large and a channel condition is poor, the network device may determine that a size of a time domain resource used for data transmission by the terminal device is greater than one slot, that is, M is greater than 1. If to-be-transmitted data packet is small and a channel condition is good, the network device may determine that a size of a time domain resource used for data transmission by the terminal device is one slot, that is, M = 1, or the network device may determine that a size of a time domain resource used for data transmission by the terminal device is less than one slot. In this case, M may be in a unit of a symbol, for example, M = 7 symbols.

When the indication information sent by the network device indicates the size of the time domain resource for the first data, the network device may further determine a quantity of transport blocks (transport blocks, TBs) in the indicated time domain resource. The quantity of the transport blocks may be less than or equal to transmission slots (it is assumed that a transmission duration interval is a slot, that is, M is in a unit of a slot), or the quantity of the transport blocks may be greater than or equal to transmission slots. When the channel condition is poor, transmitting one transport block through a plurality of slots can achieve better receiving performance. When the channel condition is good, transmitting a plurality of transport blocks through one slot can achieve a higher throughput. For example, the network device determines that the size of the time domain resource used for data transmission is M slots, a quantity of TBs L = k * M, where a value of k (k is an integer greater than 0) may be 1, indicating that one transport block is transmitted in each slot. The value of k is 2, indicating that two transport blocks are transmitted in one slot. The value of k is 1/M, indicating that one transport block is transmitted in M slots. The value of k is 2/M, indicating that two transport blocks are transmitted in M slots.

In this embodiment of this application, to further reduce power consumption of the terminal device, an interval between an end moment for communicating the second indication information and data for communicating the second indication information needs to be greater than or equal to duration G. The duration may be determined based on a processing capability of the terminal device. For example, the duration may be N1 symbols. N1 is PDSCH processing duration of the terminal device, or is an agreed value. For example, it is agreed that, for a subcarrier spacing of 15 kHz, G is 1.5 OFDM symbols, for a 30 kHz subcarrier spacing, G is three OFDM symbols, and for a 60 kHz subcarrier spacing, G is six OFDM symbols. In another aspect, to reduce a data transmission delay, the limitation may be excluded. For example, G = 0 may be directly set, or a start moment of data transmission indicated by the second indication information and a time domain resource for the second indication information overlap.

For example, when the first indication information or the second indication information indicates the value of K or M, a binary number may be directly used for representation. For example, 00 may represent K = 0, 01 may represent K = 1, 10 may represent K = 2, and 11 may represent K = 3. For another example, 00 represents M = 1, 01 represents M = 2, 10 represents M = 3, and 11 represents M = 4. Alternatively, a discrete value of the value of M may be selected to represent a larger range with fewer bits, to reduce a quantity of bits required for carrying K or M, and save signaling transmission redundancy. For example, 00 represents M = 1, 01 represents M = 2, 10 represents M = 4, and 11 represents M = 8. Alternatively, the values of M and K may be indicated through table index numbers. For example, one column or two columns are added to an existing time domain resource allocation (Time domain resource allocation, TDRA) table to indicate the value of K, the value of M, or the values of K and M. Sequence numbers of a TDRA table in the first indication information or the second indication information indicate the value of K, the value of M, or the values of K and M.

In an optional embodiment, the second indication information is carried through a sequence or a physical downlink control channel.

In this embodiment of this application, the sequence is used to carry the second indication information, to obtain better transmission reliability.

For example, when the second indication information is carried through the sequence, and when detecting the corresponding sequence, the terminal device considers that the second indication information is sent, and determines the value of K according to a corresponding rule. For a value manner of K, refer to the foregoing related description. Details are not described herein again. Correspondingly, if the terminal device does not detect a corresponding sequence, the terminal device considers that second signaling is not sent. When the second indication information is carried through the PDCCH, when detecting the corresponding PDCCH, the terminal device considers that the second indication information is sent, and determines the value of K according to a corresponding rule. For a value manner of K, refer to the foregoing related description. Details are not described herein again. Correspondingly, if the terminal device does not detect a corresponding PDCCH, the terminal device considers that second signaling is not sent.

For example, the sequence may be a ZC sequence, a gold sequence, an M sequence, a Walsh sequence or another random sequence, or an orthogonal sequence.

For example, a sequence (Gold sequence) that is the same as or similar to that of a DMRS is used to indicate the second indication information. For example, the network device carries the second indication information by using a sequence that is the same as or similar to that of a reference signal.

The sequence used by the DMRS is the sequence used in 3GPP TS 38.211 V 16.6.0 7.4.1.1.1. According to the protocol, an initial value $c_{init}$ of the DMRS sequence meets the following formula:

$$c_{\text{init}} = \left( 2^{17} \left( N_{\text{symb}}^{\text{slot}} n_{s,f}^{\mu} + l + 1 \right) \left( 2 N_{\text{ID}}^{\bar{n}_{\text{SCID}}^{\bar{\lambda}}} + 1 \right) + 2^{17} \left\lfloor \frac{\bar{\lambda}}{2} \right\rfloor + 2 N_{\text{ID}}^{\bar{n}_{\text{SCID}}^{\bar{\lambda}}} + \bar{n}_{\text{SCID}}^{\bar{\lambda}} \right) \bmod 2^{31}$$

$l$ is a number of OFDM symbols in a slot, $n_{s,f}^{\mu}$ is a number of slots in a frame, $N_{ID}^{0}, N_{ID}^{1} \in \{0, 1, \dots, 65535\}$ is a parameter configured based on higher layer signaling, a value of $\bar{\lambda}$ is 0 or a CDM group value, and a value of $\bar{n}_{SCID}^{\bar{\lambda}}$ is 0 or 1, and is determined according to a predefined rule and based on the higher layer signaling and $\bar{\lambda}$.

A specific implementation method is as follows: An initial value $c_{init}$ of a sequence that carries the second indication information is different from the initial value $c_{init}$ of the DMRS.

For example, the initial value $c_{init}$ of the sequence that carries the second indication information meets the following formula:

$$c_{init} = \left( 2^{17} \left( N_{symb}^{slot} n_{s,f}^{\mu} + l + 1 \right) \left( 2 N_{ID}^{3} + 1 \right) + 2^{17} \left\lfloor \frac{\lambda'}{2} \right\rfloor + 2 N_{ID}^{3} + n_{SCID} \right) mod \; 2^{31}$$

$N_{ID}^{3}$ is determined by the network device based on a configuration of the network device, the network device may select a proper $N_{ID}^{3}$ to avoid a sequence conflict, $n_{\text{SCID}} \in \{0, 1\}$ is configured based on higher layer signaling or indicated by first signaling (DMRS sequence initialization in first signaling), and $\lambda'$ is a CDM group.

For example, the initial value $c_{init}$ of the sequence that carries the second indication information meets the following formula.

$$c_{\text{init}} = \left( 2^{17} \left( N_{\text{symb}}^{\text{slot}} n_{s,f}^{\mu} + l + 1 \right) \left( 2 N_{\text{ID}}^{\bar{n}_{\text{SCID}}^{\bar{\lambda}}} + 1 \right) + 2^{17} \left\lfloor \frac{\bar{\lambda}}{2} \right\rfloor + 4 N_{\text{ID}}^{\bar{n}_{\text{SCID}}^{\bar{\lambda}}} + 2 N_{\text{ID}}^{\bar{n}_{\text{SCID}}^{\bar{\lambda}}} + \bar{n}_{\text{SCID}}^{\bar{\lambda}} \right) \bmod 2^{31}$$

In this embodiment of this application, the DMRS sequence is used to carry the second indication information. A frequency domain resource of the DRMS sequence may be configured to be consistent with the frequency domain resource indicated by the first indication information. In this case, when indicating a start location of data transmission, the second indication information may be further used for data channel demodulation, to improve modulation performance. In addition, the DMRS during data transmission is reduced, and system transmission redundancy is reduced.

For example, in this embodiment of this application, to avoid a conflict between the second indication information and a DMRS for normal data transmission of the terminal device, a time domain resource for communicating the second indication information may be configured to be different from a time domain resource of the DMRS for communicating the data. For example, a normal DMRS symbol is generally not located in a symbol 13. Therefore, the second indication information may be configured in the symbol 13, and the symbol 13 is located in a last symbol of a slot. This configuration manner can reduce impact on scheduling of a slot in which the second indication information is located.

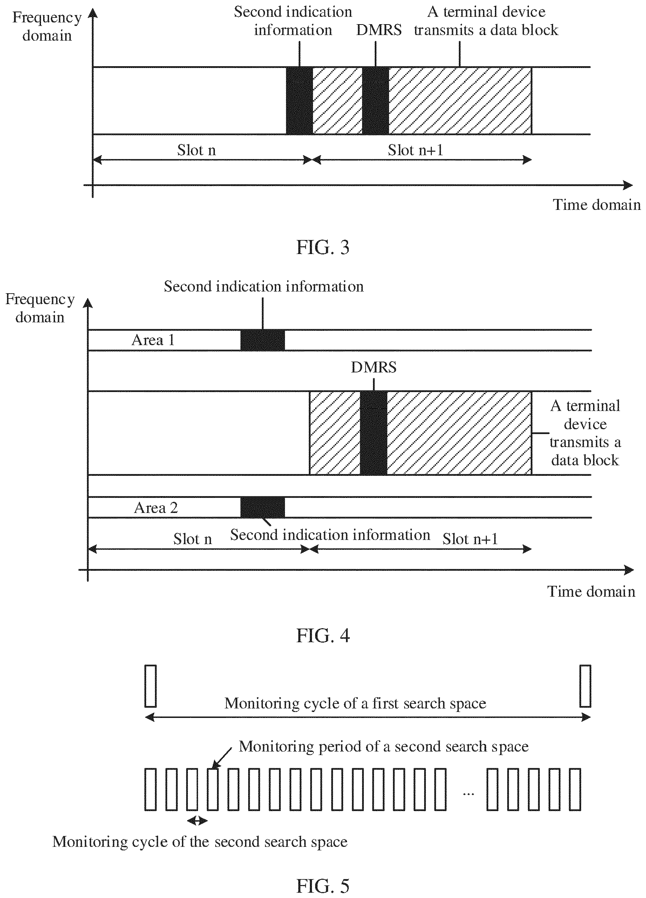

FIG. 3 shows a resource configuration manner for a sequence for carrying second indication information according to an embodiment of this application. As shown in FIG. 3, a first black rectangular shaded area carries the second indication information, a diagonal shaded rectangular area indicates time-frequency resources used by the terminal device to transmit a data block, and a DMRS of the data block is sent in a second black rectangular shaded area.

FIG. 4 shows another resource configuration manner for a sequence for carrying second indication information according to an embodiment of this application. As shown in FIG. 4, both an area 1 and an area 2 are frequency domain resources of a sequence configured to carry the second indication information. When determining to send the second indication information, the network device may send the second indication information in black shaded areas of the area 1 and the area 2. A diagonal shaded rectangular area indicates time-frequency resources used by the terminal device to transmit a data block, and a DMRS of the data block is sent in a black rectangular shaded area in a slot n+1.

It should be understood that the network device may notify, based on the configuration information, the terminal device of the sequence to be used, or the network device and the terminal device may determine the sequence to be used according to a predefined rule.

In this embodiment of this application, frequency domain resources of the sequence that carries the second indication information may be continuous, to reduce monitoring power consumption of the terminal, or may be discontinuous, to obtain a frequency diversity gain.

The following shows three specific implementations for carrying the second indication information according to embodiments of this application.

Manner 1: The second indication information is indicated through a sequence.

For example, a sequence 1 is used to indicate "activating or using" the frequency domain resource indicated by the first indication information, a sequence 2 is used to indicate "not activating or not using" the frequency domain resource indicated by the first indication information, and the time domain resource is determined according to a predefined rule. Alternatively, a sequence 2 is used to indicate "activating or using" the frequency domain resource indicated by the first indication information, a sequence 1 is used to indicate "not activating or not using" the frequency domain resource indicated by the first indication information, and the time domain resource is determined according to a predefined rule.

For example, a sequence 1 is used to indicate "activating or using" the frequency domain resource indicated by the first indication information, not sending a sequence 1 indicates "not activating or not using" the frequency domain resource indicated by the first indication information, and the time domain resource is determined according to a predefined rule. Alternatively, a sequence 1 is used to indicate "not activating or not using" the frequency domain resource indicated by the first indication information, not sending a sequence 1 indicates the frequency domain resource indicated by the first indication information, and the time domain resource is determined according to a predefined rule. For example, if the second indication information sent by the network device in a slot n indicates "activating" or "using" the frequency domain resource indicated by the first indication information, it indicates that, starting from a slot n+K, the frequency domain resource indicated by the first indication information is used for data transmission for a size of a slot resource indicated by the first indication information. For a value of K, refer to the foregoing related description. Details are not described herein again. When K = 1 is predefined, if the second indication information sent by the network device in the slot n may indicate "not activating" or "not using" the frequency domain resource indicated by the first indication information, it indicates that, starting from a slot n+1, the frequency domain resource indicated by the first indication information is not used for data transmission for a size of a slot resource indicated by the indication information.

For example, when the second indication information further indicates one or more of a time domain resource K, data transmission duration M, and an MCS, different sequences may also be used to indicate different values, as shown in Table 1.

**Table 1**

|  | K | M | MCS |
|---|---|---|---|
| Not send a sequence | Not activate |  |  |
| Sequence 1 | K1 | M1 | MCS 1 |
| Sequence 2 | K1 | M2 | MCS 2 |
| Sequence 3 | K2 | M1 | MCS 1 |
| Sequence 4 | K2 | M2 | MCS 2 |

K1 and K2 indicate different values of K, M1 and M2 indicate different values of M, MCS 1 and MCS 2 indicate different values of MCS, and value ranges of K, M, and MCS may be agreed in a protocol, or are sent to the terminal device through the first indication information.

Manner 2: The second indication information is carried through a PDCCH. The second indication information may be 1-bit signaling or signaling greater than 1 bit. Because a quantity of transmission bits of the second indication information is less than a quantity of bits of signaling in an existing PDCCH format 0-0/0-1/1-0/1-1, transmission redundancy of the second indication information is reduced, and complexity and power consumption of detection by the terminal device are reduced.

1. The second indication information is 1-bit indication information, and the 1-bit indication information indicates "activating/using" or "not activating/not using" the frequency domain resource indicated by the first indication information. For example, if the second indication information sent by the network device in the slot n indicates "activating" or "using" the frequency domain resource indicated by the first indication information, it indicates that, starting from the slot n+K, the frequency domain resource indicated by the first indication information is used for data transmission between the network device and the terminal device for slots of a slot length M indicated by first signaling. K may be sent to the terminal device in the first indication information, or K may be determined according to a predefined rule. If the second indication information sent by the network device in the slot n indicates "not activating" or "not using", it indicates that, starting from the slot n+K, the frequency domain resource indicated by the first indication information may not be used for data transmission between the network device and the terminal device for slots of a slot length M indicated by the first indication information.

2. The second indication information is indication information greater than 1 bit. For example, the second indication information is m-bit indication information, the m-bit indication information may indicate "activating" or "not activating" the frequency domain resource indicated by the first indication information, and an explanation of m-bit signaling may be determined according to a predefined rule. For example, m = 2, Table 2 shows a predefined method.

**Table 2**

| Second indication information | Indication information |
|---|---|
| 00 | The second indication information sent by the network device in the slot n indicates that, starting from the slot n, the frequency domain resource indicated by the first indication information is used for data transmission for the slots of the slot length M indicated by the first indication information |
| 01 | The second indication information sent by the network device in the slot n indicates that, starting from the slot n+1, the frequency domain resource indicated by the first indication information is used for data transmission for the slots of the slot length M indicated by the first indication information |
| 10 | The second indication information sent by the network device in the slot n indicates that, starting from the slot n+2, the frequency domain resource indicated by the first indication information is used for data transmission for the slots of the slot length M indicated by the first indication information |
| 11 | Not activate the frequency domain resource indicated by the first indication information |

For example, m1 bits may indicate the time domain resource K, m2 bits may indicate the data transmission duration M, and m3 bits may indicate the MCS. Values of m1, m2, and m3 are all integers greater than or equal to 0. In this case, the quantity of bits of the second indication information may be m1+m2+m3.

With reference to the foregoing example, when m1, m2, and m3 are equal to 0, corresponding values of K, M, and MCS may be obtained according to an agreed rule, or may be determined based on the first indication information. When m1 = 0, m2 = 4, and m3 = 5, in this case, the network device sends the second indication information in the n slot (the second indication information indicates K, M, and MCS). The second indication information is a binary bit "111001111". First four bits "1100" indicate that M = 13 (a corresponding rule here is that a binary number is converted into a decimal number and then added by 1), and last five bits indicate that a modulation and coding scheme whose MCS index (index) is 17 is used. In this case, the second indication information indicates that 13 slots starting from n+1 are activated for data transmission, and the modulation and coding scheme corresponding to the MCS index 17 is used for data in the 13 slots.

For another example, when the second indication information further indicates one or more of a time domain resource K, data transmission duration M, and an MCS, 2-bit information may alternatively be used to indicate different values, as shown in Table 3.

**Table 3**

|  | K | M | MCS |
|---|---|---|---|
| Not send second indication information | Not activate | | |
| 00 | K1 | M1 | MCS 1 |
| 01 | K1 | M2 | MCS 2 |
| 10 | K2 | M1 | MCS 1 |
| 11 | K2 | M2 | MCS 2 |

K1 and K2 indicate different values of K, M1 and M2 indicate different values of M, and MCS 1 and MCS 2 indicate different values of MCS. Value ranges of K, M, and MCS may be agreed in a protocol, or are sent to the terminal device through the first indication information.

Manner 3: The second indication information is carried through a PDCCH, and second indication information of a plurality of terminal devices may be combined and sent in one downlink control information (downlink control information, DCI) format. Because a quantity of transmission bits of the second indication information is less than a quantity of bits of signaling in an existing PDCCH format 0-0/0-1/1-0/1-1, transmission redundancy of the second indication information is reduced, and complexity and power consumption of detection by the terminal device are reduced.

Further, the downlink control channel may use a PDCCH to carry the second indication information, and the second indication information may be coded by using polar code. In this embodiment of this application, if the quantity of bits of the second indication information is small, and is usually less than 11 bits, another small code block coding method may be used. A specific coding scheme may be reused in the channel coding method described in 3GPP TS 38.212 V G.6.0 5.3.3. In some embodiments, the channel coding method described in TS 38.212 V G.6.0 5.3.3 is used only for uplink control signaling transmission. In this embodiment of this application, the channel coding method described in 3GPP TS 38.212 V G.6.0 5.3.3 is used for downlink control signaling transmission. Some uplink coding modules can be reused, to reduce implementation complexity.

In an optional embodiment, the method 200 further includes: The network device sends configuration information, where the configuration information is used to configure either of the monitoring cycle of the first search space and the monitoring cycle of the second search space. Correspondingly, the terminal device receives the configuration information.

In this embodiment of this application, either of the monitoring cycle of the first search space and the monitoring cycle of the second search space may be configured based on a transmission cycle of communication data, a communication channel environment, mobility of the terminal device, a network load status, power consumption of the terminal device, and the like, to reduce power consumption of the terminal device as much as possible on the basis of meeting a data transmission requirement.

For example, the network device may determine the monitoring cycle of the first search space based on a change of the to-be-transmitted data and a change of a transmission channel. A long monitoring cycle of the first search space is set when the size of the data packet changes stably and the channel condition is stable; and a short monitoring cycle of the first search space is set when the data packet changes quickly and the channel condition changes quickly. For example, a data packet size and a channel condition of an XR service change stably in general. Therefore, the network device may set a long monitoring cycle of the first search space (for example, set to 80 slots or 160 slots). The network device may set the monitoring cycle of the second search space based on an arrival moment of a data packet. For example, when a frame rate of an XR service is 30 fps, the monitoring cycle of the second search space may be set to a value close to 33.3 ms, for example, set to 33 ms. When a frame rate of the XR service is 60 fps, the monitoring cycle of the second search space may be set to a value close to 8.3 ms, for example, set to 8 ms. To make the monitoring cycle of the second search space as close as possible to an arrival cycle of the data packet, a second search space cycle that is variable according to a specific pattern may be further set. For example, when the frame rate of the XR service is 60 fps, a cycle of the second search space is a pattern cycle of {16.5 ms, 16.5 ms, 17 ms}. When a subcarrier spacing is 30 kHz, a cycle of the second search space is a pattern cycle of {33 slots, 33 slots, 34 slots}.

For example, when the network device determines that the monitoring cycle of the first search space is 160 slots, the monitoring cycle of the second search space may be 33 slots or 34 slots. In other words, the monitoring cycle of the first search space determined by the network device is greater than the monitoring cycle of the second search space determined by the network device.

The following describes in detail a relationship between the monitoring cycle of the first search space and the monitoring cycle of the second search space with reference to FIG. 5. As shown in FIG. 5, a monitoring cycle of a first search space includes a plurality of monitoring cycles of second search spaces. If the monitoring cycle of the first search space is 80 slots, and the monitoring cycle of a second search space is 2 slots, the monitoring cycle of the first search space includes 40 monitoring cycles of the second search spaces.

With reference to a characteristic of an XR service, when the XR service is 60 fps, the network device determines that the monitoring cycle of the first search space is 80 ms, and the monitoring cycle of the second search space may be 16.5 ms or 17 ms. In other words, the monitoring cycle of the first search space determined by the network device is greater than the monitoring cycle of the second search space determined by the network device.

For example, the configuration information may include at least one of the following information: a start location of the first search space, a size of a frequency domain resource of the first search space, a location of the frequency domain resource of the first search space, a quantity of continuous monitoring slots in a monitoring period of the first search space, a location of a monitoring period start symbol in a monitoring slot of the first search space, and a length of the monitoring period in the monitoring slot of the first search space. Optionally, the size of the frequency domain resource of the first search space, the location of the frequency domain resource of the first search space, and the length of the monitoring period of the first search space may be indicated by an identifier of a control resource set (control resource set, CORESET) associated with the first search space.

For example, the configuration information may further include at least one of the following information: a start location of the second search space, a size of a frequency domain resource of the second search space, a location of the frequency domain resource of the second search space, a quantity of continuous monitoring slots in a monitoring period of the second search space, an interval slot between two adjacent monitoring slots in the second search space or a location of a monitoring period start symbol in a monitoring slot of the second search space, and a length of the monitoring period in the monitoring slot of the second search space. Optionally, the size of the frequency domain resource of the second search space, the location of the frequency domain resource of the second search space, and the length of the monitoring period of the second search space may be indicated by an identifier of a CORESET associated with the second search space. In this embodiment of this application, the interval slot between the two adjacent monitoring slots in the second search space is added to the configuration information, to reduce duration in which the terminal device monitors the second indication information within the continuous monitoring duration, so as to further reduce power consumption of the terminal device.

In this embodiment of this application, the quantity of continuous monitoring slots of the second search space each time is referred to as a continuous monitoring period of the second search space, duration corresponding to the continuous monitoring period is referred to as continuous monitoring duration of the second search space, and an interval between continuous monitoring periods of adjacent two second search spaces is referred to as the monitoring cycle of the second search space.

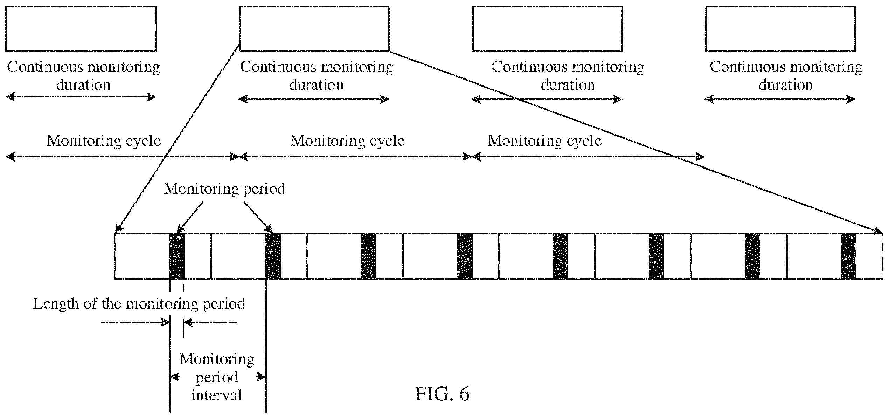

FIG. 6 shows a configuration manner for a second search space according to an embodiment of this application. As shown in FIG. 6, three monitoring cycles of second search spaces are included. Each monitoring cycle includes a continuous slot whose length is a quantity of continuous monitoring slots, namely, continuous monitoring duration of one second search space. Continuous monitoring duration of each second search space includes a plurality of monitoring periods of second search spaces, and a monitoring period of each second search space may last for one or more symbols that are referred to as a length of a monitoring period of second signaling. An interval between two adjacent monitoring periods in a continuous monitoring period of a second search space is referred to as a monitoring period interval of the second search space.

In this embodiment of this application, the continuous monitoring duration of the second search space may be determined based on a jitter range of arrival moments of transmitted data. This design can trigger data transmission in time after data arrives, thereby reducing a data transmission delay. For example, if the jitter range of arrival moments of data is [-4 ms, 4 ms], the continuous monitoring duration of the second search space may be set to 8 ms. If a slot is 0.5 ms, that is, the continuous monitoring duration of the second search space is 16 slots. If one slot is 1 ms, the continuous monitoring duration of the second search space is 8 slots.

Further, in this embodiment of this application, the continuous monitoring duration of the first search space is configured to be less than the continuous monitoring duration of the second search space. For example, the continuous monitoring duration of the first search space is configured to be 2 slots, and the continuous monitoring duration of the second search space is configured to be 8 slots. The continuous monitoring duration of the first search space is reduced, to reduce power consumption for monitoring first signaling by the terminal device. However, continuous duration of the second search space may cover the jitter range of the arrival moments of the data, thereby reducing a data transmission delay.

In this embodiment of this application, a length of the monitoring period of each second search space may be one or more symbols. The network device may determine the length of the monitoring period of the second search space based on one or more required factors such as detection performance of the second indication information, a channel propagation condition, or the size of the frequency domain resource for the second indication information. For example, if the second indication information requires high detection performance, a poor channel condition, and/or a small frequency domain resource for the second indication information, the length of the monitoring period of the second search space may be a large value, for example, 2 symbols. When the second indication information requires low detection performance, a good channel condition, and/or a large frequency domain resource for second signaling, the length of the monitoring period of the second search space may be a small value, for example, 1 symbol.

For example, the monitoring period interval of the second search space is equal to the monitoring cycle of the second search space, and the network device may configure only the monitoring cycle of the second search space or configure only the monitoring period interval of the second search space. Alternatively, the network device may define a default value for one or more parameters, and does not send the default value to the terminal device through signaling. For example, the network device and the terminal device may agree, in a protocol, that the monitoring period interval of the second search space is 1 slot. Alternatively, the network device and the terminal device may agree, in a protocol, that the length of the monitoring period of second signaling is 2 symbols.

In some embodiments, an interval between two adjacent monitoring slots in continuous monitoring duration of the search space is 1 slot. In this embodiment of this application, an interval slot between two adjacent monitoring slots in the second search space is added to the configuration information. The interval slot may be configured to be greater than or equal to 1 slot, to further reduce power consumption of the terminal device.

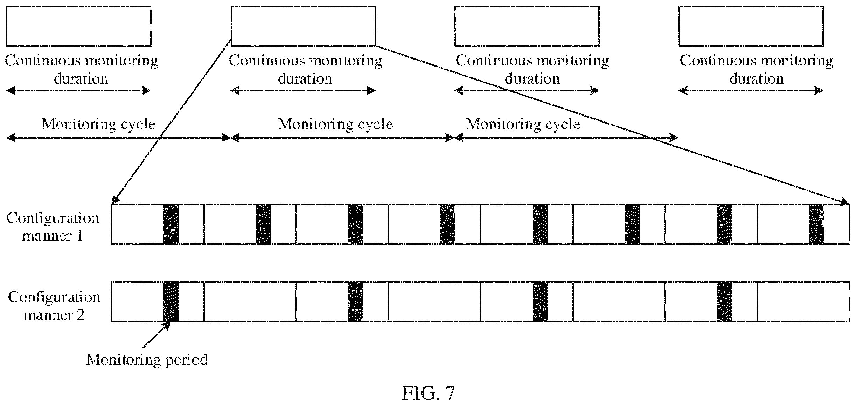

FIG. 7 shows a configuration manner for a monitoring period interval for a second search space according to an embodiment of this application. As shown in FIG. 7, a monitoring period interval between two adjacent second search spaces in a configuration manner 2 is twice a monitoring period interval between two adjacent second search spaces in a configuration manner 1. For example, if in the configuration manner 1, the monitoring period interval between the two adjacent second search spaces is 1 ms, in the configuration manner 2, the monitoring period interval between the two adjacent second search spaces is 2 ms. It should be understood that a large monitoring period interval can reduce power consumption for monitoring the second indication information by the terminal device. A small monitoring period interval can reduce a data transmission delay. In conclusion, the network device can configure, based on an energy saving requirement and a data transmission delay of the terminal device, a proper value for data transmission.

In an optional embodiment, a frequency domain resource for communicating the second indication information is the same as a frequency domain resource for communicating the data, or a size of the frequency domain resource for communicating the second indication information is less than a size of the frequency domain resource for communicating the data.

In this embodiment of this application, the frequency domain resource for communicating the second indication information is the same as the frequency domain resource for communicating the data. If the second indication information is carried through a sequence, the sequence for the second supporting information may be further used for data demodulation, to improve data demodulation performance. Alternatively, a quantity of DMRSs used for data demodulation can be reduced, to improve system efficiency. If the second indication information is carried through a physical control channel, the second indication information and the data may share a reference signal used for demodulation. The size of the frequency domain resource for communicating the second indication information is less than a size of a frequency domain resource for receiving the data, to reduce transmission redundancy for communicating the second indication information, and reduce monitoring power consumption of the terminal device.

For example, for a terminal device that supports a small quantity of BWPs, the network device may configure a same frequency domain resource as the frequency domain resource for communicating the second indication information and a frequency domain resource for communicating the first indication information. This manner can avoid a delay and power consumption caused by frequent BWP switching.

In an optional embodiment, the frequency domain resource of the second search space is the same as the frequency domain resource of the first search space, or the size of the frequency domain resource of the second search space is less than the size of the frequency domain resource of the first search space.

In an optional embodiment, the method 200 further includes: The network device determines either of a start location of a subsequent second search space and the monitoring cycle of the second search space based on a slot location in which the second indication information is currently sent in the second search space. Correspondingly, the terminal device determines either of the start location of the subsequent second search space and the monitoring cycle of the second search space based on a slot location in which the second indication information is currently received in the second search space.

For example, when the data in this embodiment of this application is a service (for example, an XR service) whose frame cycle may fluctuate, a manner of dynamically adjusting a start moment of the monitoring cycle of the second search space may be used, to better match service transmission. For example, if the second indication information is detected in a slot n, a start slot of next detection of the second indication information is n+L, where L may be configured by the network device for the terminal device, a value of L may be (P-R/2), P is a data cycle (unit: slot), and R is a jitter range of data arrival moments (unit: slot). It is assumed that 1 ms = 2 slots. For example, if the data cycle is 16.67 ms (that is, 33 slots), and the jitter range of data arrival moments is 8 ms (that is, 16 slots), the value of L is 33 - 8 = 25 slots. In other words, when the second indication information is detected in the slot n, a slot in which the second indication information starts to be detected next time is (n+25) slots.

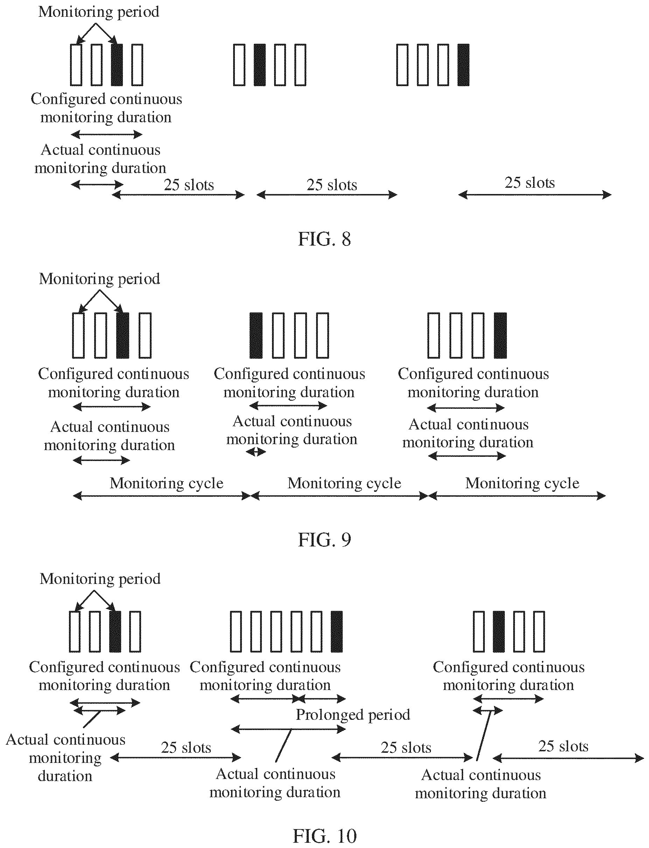

FIG. 8 shows a monitoring manner for second indication information according to an embodiment of this application. As shown in FIG. 8, within first monitoring duration configured by the network device for the terminal device, if the second indication information is obtained through monitoring in a third monitoring period (a first black shaded area) (that is, actual monitoring duration is duration from a start location of a first monitoring period to an end location of the third monitoring period), a start moment of monitoring duration for monitoring the second indication information next time is 25 slots after the third monitoring period. The rest may be deduced by analogy. In this way, the terminal device does not need to monitor the second indication information for 25 slots, to reduce power consumption of the terminal device.

In an optional embodiment, the method 200 further includes: The network device sends third indication information, where the third indication information indicates either of the start location of the second search space and the monitoring cycle of the second search space. Correspondingly, the terminal device receives the third indication information.

In an optional embodiment, the method 200 further includes: The terminal device stops monitoring the second indication information in remaining continuous monitoring duration in a current monitoring cycle of the second search space.

For example, after obtaining the second indication information through monitoring in any monitoring period within monitoring duration of a second search space, the terminal device may not continue to monitor the second indication information in another remaining monitoring period within the monitoring duration of the second search space.

The processing manner in this embodiment of this application can further reduce power consumption for monitoring the second indication information by the terminal device.

FIG. 9 shows another monitoring manner for second indication information according to an embodiment of this application. As shown in FIG. 9, three monitoring cycles of second search spaces are included, and continuous monitoring duration configured for each monitoring cycle includes four monitoring periods of the second search spaces. In a first monitoring cycle, the terminal device monitors the second indication information in a first monitoring period. If the terminal device does not detect the second indication information, the terminal device monitors the second indication information in a second monitoring period. If the terminal device still does not detect the second indication information, the terminal device monitors the second indication information a third monitoring period (namely, a first black shaded location in the figure). If the terminal device detects the second indication information, the terminal device may not monitor the second indication information in a fourth monitoring period. In a second monitoring cycle, the terminal device monitors second signaling in a first monitoring period. If the terminal device detects the second indication information (namely, a second black shaded location in the figure), and the terminal device may not monitor the second signaling in remaining second, third, and four monitoring periods. In a third monitoring cycle, the terminal device sequentially monitors the second indication information in a first monitoring period, a second monitoring period, a third monitoring period, and a fourth monitoring period, until the second indication information is detected in the fourth monitoring period (a third black shaded location in the figure). Alternatively, if the second indication information is not detected until continuous monitoring duration of the third monitoring cycle expires, monitoring of the second indication information in the monitoring cycle is stopped.

For example, when the second indication information is not obtained through monitoring after continuous monitoring duration of a current monitoring cycle of the second search space ends, monitoring of the second indication information in the current monitoring cycle of the second search space is stopped, or monitoring of the second indication information is continued in a slot after the continuous monitoring duration expires, until the second indication information is detected or until fourth indication information is received. The fourth indication information indicates to stop monitoring the second indication information.

For example, the network device and the terminal device may determine, based on at least one of a network load status, a power saving policy of the terminal device, a quality of service requirement of data, and the like, whether to use a monitoring period prolonging manner. For example, if the terminal device does not need to save electricity, and a data transmission delay is low, a manner of prolonging the monitoring period may be used to reduce the data transmission delay. Alternatively, if the data may be received with a high transmission delay, and the terminal wants to save electricity as much as possible, the manner of prolonging the monitoring period is not used.

It should be understood that a detection period of a monitoring prolonged period (the slot after the continuous monitoring duration expires) of the second search space may use a same configuration as in the continuous monitoring duration of the second search space.

FIG. 10 shows still another monitoring manner for second indication information according to an embodiment of this application. As shown in FIG. 10, three monitoring cycles of second search spaces are included, and continuous monitoring duration configured for each monitoring cycle includes four monitoring periods of the second search space. In a first monitoring cycle, if the terminal device detects the second indication information in a third monitoring period, the terminal device stops monitoring the second indication information in the current monitoring cycle, that is, the terminal device does not continue to monitor the second indication information in a fourth monitoring period in the first monitoring cycle. In a second monitoring cycle, if the terminal device does not detect the second indication information within configured monitoring duration, the terminal device continues to monitor the second indication information in a slot (a prolonged period) after the continuous monitoring duration expires. If the terminal device obtains the second indication information through monitoring in a second detection period of the prolonged period, the terminal device stops continuing monitoring, and continues to monitor the second indication information at an interval of 25 slots (one monitoring cycle).

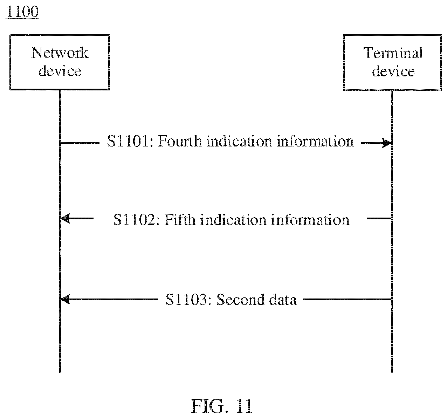

The following describes in detail a resource indication method 1100 provided in an embodiment of this application with reference to FIG. 11. The method 1100 may be applied to the communication system 100 shown in FIG. 1. However, this embodiment of this application is not limited thereto. In FIG. 11, an example in which a network device as a scheduling node and a terminal device as a scheduled node are used as execution bodies of schematic interaction is used to illustrate the method. However, this application does not limit the execution bodies of the schematic interaction.

FIG. 11 shows the another resource indication method 1100 according to this embodiment of this application. As shown in FIG. 11, the method 1100 may include the following steps.

S 1101: The network device sends fourth indication information in a third search space, where the fourth indication information indicates a frequency domain resource for sending second data by the terminal device. Correspondingly, the terminal device receives the fourth indication information in the third search space.

The fourth indication information may be communicated through physical layer signaling; or a part of information in the fourth indication information may be communicated through higher layer signaling, and a part of information in the fourth indication information may be communicated through physical layer signaling. It may be understood that a sum of the part of information communicated through the higher layer signaling and the part of information communicated through the physical layer signaling in the fourth indication information may be the fourth indication information, or may be some information in the fourth indication information. This is not limited in this application.

According to the specifications of 3GPP, physical layer control signaling is sent in a candidate search space on a physical downlink control channel. It may be understood that, when the fourth indication information includes the part of information communicated through the higher layer signaling, the network device does not need to send this part of information in the fourth indication information in the search space.

For example, when being communicated through the physical layer signaling, the first indication information may be represented in a specific downlink control information format, or is represented through scrambling based on a specific RNTI.

It should be understood that for a specific implementation of S 1101, refer to the related description of S201 in the foregoing method 200. Details are not described herein again.

The second data in this embodiment of this application is uplink data sent by the terminal device to the network device, and may also be referred to as transmission data.

S1102: The terminal device sends fifth indication information at a first transmission opportunity, where the fifth indication information indicates a start transmission moment at which the terminal device sends the second data. Correspondingly, the network device monitors and receives the fifth indication information at the first transmission opportunity.

A monitoring cycle of the third search space is greater than a transmission opportunity cycle of the first transmission opportunity.

After receiving the fourth indication information, the terminal device does not immediately use a frequency domain resource indicated by the fourth indication information, but uses the frequency domain resource indicated by the fourth indication information for transmission only when there is uplink data to be transmitted. This can avoid unnecessary waste of radio resources, and avoids an increase in power consumption of the terminal device and an increase in interference in a communication system caused by sending an empty data packet by the terminal device.

In an optional implementation method, the terminal device and the network device may not determine, based on the fifth indication information sent at the first transmission opportunity, an actual start transmission moment at which the terminal device sends the data. In this implementation method, because the network device does not know when the terminal device uses the frequency domain resource indicated by the fourth information, the network device needs to continuously perform blind detection on all possible time domain resources to determine whether the terminal device has sent the second data. This manner increases complexity of the network device. When determining that there is the uplink data to be transmitted, the terminal device sends the fifth indication information to the network device, to avoid complexity caused by blind detection by the network device on whether there is data for transmission.

The network device and the terminal device may further determine a type of data transmitted on the frequency domain resource indicated by the fourth indication information. For example, only an XR service can use the frequency domain resource indicated by the fourth indication information for transmission. Alternatively, it may be indicated that only data whose priority is higher than a specific value or whose priority is a determined value may be transmitted by using the frequency domain resource indicated by the fourth indication information. This manner can avoid an increase in a transmission delay of data of a target type because another data occupies the frequency domain resource indicated by the fourth indication information.

S1103: The terminal device sends the second data to the network device based on the frequency domain resource and the start transmission moment. Correspondingly, the network device receives the second data from the terminal device based on the frequency domain resource and the start transmission moment.

Further, after sending the fifth indication information, the terminal device sends uplink data based on time-frequency resources determined based on the fourth indication information and the fifth indication information. Correspondingly, after receiving the fifth indication information, the network device determines, based on information indicated by the fifth indication information, a time domain in which the frequency domain resource indicated by the fourth indication information is activated to take effect, to determine time-frequency resources for carrying the data, so as to receive the uplink data.

In this embodiment of this application, the network device sends the fourth indication information in the monitoring cycle of the third search space, and allocates in advance an uplink transmission resource that can be used by the terminal device. The monitoring cycle of the third search space is greater than the transmission opportunity cycle of the first transmission opportunity. This avoids a problem that signaling transmission redundancy is high because the terminal device repeatedly sends, at the first transmission opportunity, a frequency domain resource that is expected to be used for data transmission. According to the solution of this application, a quantity of times of sending frequency domain resource information can be reduced, to reduce redundancy of transmission of scheduling signaling, improve network transmission efficiency, and reduce power consumption of the terminal device. After data arrives, the terminal device sends the fifth indication information in the transmission cycle of the first transmission opportunity, to notify the network device of a time domain resource for data transmission that is expected by the terminal device in this case, so as to avoid a problem that a transmission resource is wasted to reduce a delay.

It should be understood that, for the transmission opportunity cycle of the first transmission opportunity in S 1102, refer to the related description of the monitoring cycle of the second search space. Details are not described herein again. Correspondingly, for a transmission opportunity of the first transmission opportunity, refer to the related description of the monitoring period of the second search space. For the transmission opportunity cycle of the first transmission opportunity, refer to the related description of the monitoring cycle of the second search space. For transmission opportunity duration of the first transmission opportunity, refer to the related description of the monitoring duration of the second search space. For a transmission opportunity interval of the first transmission opportunity, refer to the related description of the monitoring period interval of the second search space. For a transmission opportunity length of the first transmission opportunity, refer to the length of the monitoring period of the second search space. Details are not described herein again. For example, the transmission opportunity duration of the first transmission opportunity may be one or more symbols, may be one or more slots, or may be equal to the transmission opportunity interval of the first transmission opportunity.

It may be further understood that the network device may determine the duration of the first transmission opportunity based on at least one of a channel state, a network load status, and power consumption of the terminal device.

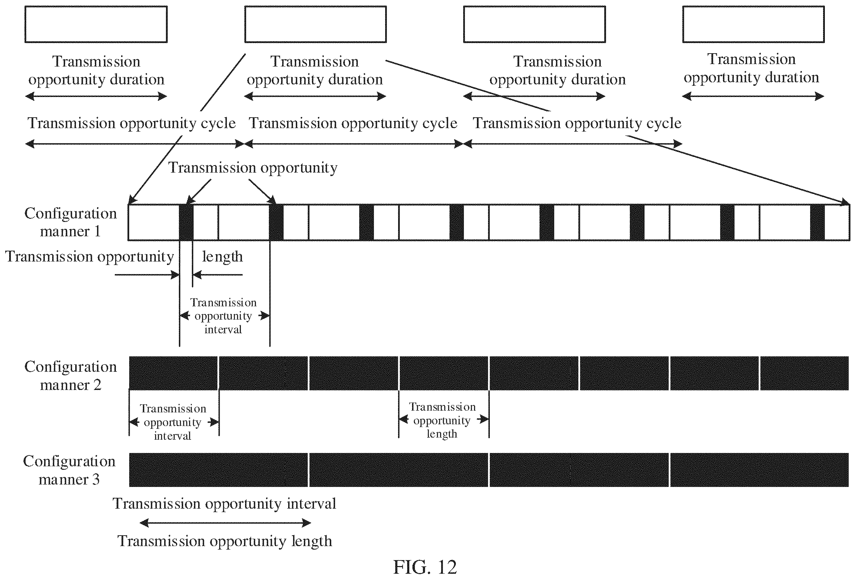

FIG. 12 shows a configuration manner for a first transmission opportunity according to an embodiment of this application. As shown in FIG. 12, in a configuration manner 1, a transmission opportunity length of the first transmission opportunity is configured as one or more symbols. In a configuration manner 2, a transmission opportunity length of the first transmission opportunity is configured as one slot. In a configuration manner 3, the terminal device configures a transmission opportunity length of the first transmission opportunity as two slots. In the configuration manner 2 and the configuration manner 3, the transmission opportunity duration is equal to a transmission opportunity interval of the first transmission opportunity.

In this embodiment of this application, the network device monitors the fifth indication information at the transmission opportunity of the first transmission opportunity. If the network device detects the fifth indication information in a slot n, it indicates that, starting from a slot n+K, the frequency domain resource is used for data transmission of the terminal device for slots of a slot length M indicated by the fourth indication information. If the network device does not obtain the fifth indication information through monitoring in a slot n, it indicates that, starting from a slot n+K, the frequency domain resource is not used for data transmission of the terminal device for slots of a slot length M indicated by the fourth indication information. If the network device detects the fifth indication information in a slot n, and the fifth indication information indicates that, starting from a slot n+K, the frequency domain resource is not used for data transmission of the terminal device for slots of a slot length M indicated by the fourth indication information, the network device may allocate, starting from the slot n+K and for the slots of the slot length M indicated by the fourth indication information, the frequency domain resource to another terminal device for use. In this case, a value of K needs to be large enough, so that the network device sends new scheduling signaling to the another terminal device.

For example, before receiving the fifth indication information, the network device may further allocate, for other data transmission, all or some frequency domain resources that are indicated by the fourth indication information and that may be indicated as activated by the fifth indication information. For example, the frequency domain resources may be used for data transmission of a terminal device 2. In this case, if the network device receives the fifth indication information that indicates a terminal device to use the frequency domain resource indicated by the fourth indication information for data transmission of the terminal device, the network device may send, to the terminal device 2, signaling for canceling the data transmission of the terminal device 2, so that the frequency domain resource is reserved for use by the terminal device that sends the fifth indication information. In other words, data transmission of the terminal device that sends the fifth indication information to the network device has a higher transmission priority. In this case, the value of K needs to meet a requirement that the network device cancels data transmission of another terminal device before the slot n+K.

In an optional embodiment, the fourth indication information further indicates at least one of the following information: a modulation and coding scheme for the second data or a size of a time domain resource for the second data. Alternatively, the fifth indication information further indicates at least one of the following information: a modulation and coding scheme for the second data or a size of a time domain resource for the second data.

For example, the fourth indication information may further indicate the modulation and coding scheme for the second data and a size of a time domain resource for sending the data. Alternatively, the fourth indication information may further indicate the modulation and coding scheme for the second data, and the fifth indication information further indicates the size of the time domain resource for the second data. Alternatively, the fourth indication information may further indicate the size of the time domain resource for the second data, and the fifth indication information further indicates the modulation and coding scheme for the second data. Alternatively, the fourth indication information may further indicate the modulation and coding scheme for the second data and the size of the time domain resource for the second data.

In this embodiment of this application, the solution in which the fourth indication information indicates the modulation and coding scheme or the size of the time domain resource for the second data is used, because the monitoring cycle of the third search space is greater than the transmission opportunity cycle of the first transmission opportunity, high redundancy of transmission of scheduling signaling caused by cyclic sending of the signaling at the transmission opportunity cycle of the first transmission opportunity can be avoided. The solution in which the fifth indication information indicates the modulation and coding scheme or the size of the time domain resource for the second data is used, so that the terminal device can determine, before data transmission and based on either of a current channel condition and a data packet size of to-be-transmitted data, a modulation and coding scheme or a size of a time domain resource for the data. For example, when a channel condition is good or a data packet is short, a modulation and coding scheme with higher spectral efficiency or a smaller data time domain resource may be used, to improve system efficiency.

In a possible design, the fifth indication information further includes at least one of the following information: a downlink control signaling format identifier, a carrier identifier, an uplink carrier identifier or a supplementary uplink carrier identifier, a bandwidth part identifier, a frequency hopping flag, a redundancy version, a new data identifier, a HARQ process number, a DAI, an SRS resource identifier, precoding information and a quantity of layers, an antenna port, an SRS request, a CSI request, CBG transmission information, an association relationship between a PTRS and a DMRS, a beta offset identifier, and DMRS sequence initialization.

In an optional embodiment, the fifth indication information is carried through a sequence, a physical uplink control channel, or a physical uplink shared channel.

It should be understood that the sequence may be one or more of a ZC sequence, a gold sequence, an M sequence, a Walsh sequence or another random sequence, or an orthogonal sequence.

For example, the fifth indication information may be carried in a PUCCH format 0 or 1. However, in a specific implementation process, to distinguish from other uplink control signaling carried in the PUCCH format 0 or 1, a resource different from that for the other uplink control signaling may be configured for the fifth indication information. Therefore, different used resources are used to identify whether the fifth indication information or the other uplink control signaling is used.

For example, the fifth indication information may be carried through a random access preamble (preamble) sequence, and the network device may configure a specific preamble to indicate the fifth indication information, so as to distinguish from a preamble (preamble) used for random access.

For example, the fifth indication information may be carried through a sequence that is the same as or similar to a reference signal. For example, both a DMRS and an uplink SRS are carried through gold sequences, but different initial values, different spreading factors, different cyclic shifts, different subcarriers, or the like may be used.

In an optional embodiment, the method 1100 further includes: The network device sends configuration information, where the configuration information is used to configure either of the monitoring cycle of the third search space and the transmission opportunity cycle of the first transmission opportunity. Correspondingly, the terminal device receives the configuration information.

It should be understood that for a process of configuring the monitoring cycle of the third search space by the network device, refer to the foregoing process of configuring the monitoring cycle of the first search space by the network device. For a process of configuring the transmission opportunity cycle of the first transmission opportunity by the network device, refer to the foregoing process of configuring the monitoring cycle of the second search space by the network device. Details are not described herein again.

It should be further understood that transmission opportunities of a same time domain resource may be configured for a plurality of terminal devices. When the transmission opportunities of the same time domain resource may be configured for the plurality of terminal devices, the plurality of terminals may perform differentiation by using different sequences or different frequency domain resources. This manner is a non-contention-based transmission opportunity, or the plurality of terminal devices may contend for using the transmission opportunity. The terminal device uses the non-contention-based transmission opportunity, to obtain better transmission reliability and reduce a transmission delay, but a resource waste may occur. The plurality of terminal devices use a contention-based transmission opportunity, to improve system efficiency, but a resource conflict may occur, thereby reducing transmission performance. The network device and the terminal device may determine, based on a quality of service requirement for communicating data, a network load status, and the like, a transmission opportunity to be used.

In an optional embodiment, a frequency domain resource for communicating the fifth indication information is the same as the frequency domain resource for the second data, or a size of a frequency domain resource for communicating the fifth indication information is less than a size of the frequency domain resource for the second data.

In this embodiment of this application, the frequency domain resource for communicating the fifth indication information is the same as the frequency domain resource for the second data. In this case, the second indication information and the second data may share a reference signal used for demodulation. The size of the frequency domain resource for communicating the fifth indication information is less than the size of the frequency domain resource for the second data, to reduce transmission redundancy, and reduce monitoring power consumption of the network device.

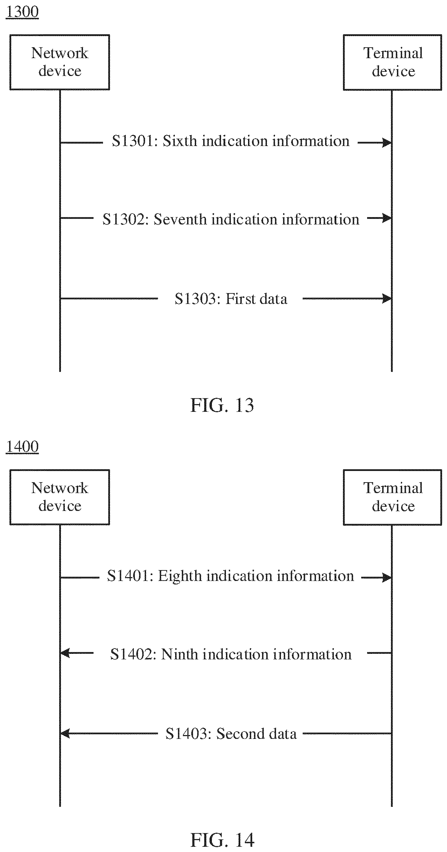

FIG. 13 shows still another resource indication method 1300 according to this embodiment of this application.

As shown in FIG. 13, the method 1300 may include the following steps.

S1301: A network device sends sixth indication information through higher layer signaling, where the sixth indication information indicates a frequency domain resource for first data. Correspondingly, a terminal device receives the sixth indication information.

Optionally, all information in the sixth indication information may be communicated through the higher layer signaling; or a part of information in the sixth indication information may be communicated through the higher layer signaling, and a part of information in the sixth indication information may be communicated through physical layer signaling. It may be understood that a sum of the part of information communicated through the higher layer signaling and the part of information communicated through the physical layer signaling in the sixth indication information may be the first indication information, or may be some information in the first indication information. This is not limited in this application.

It may be understood that when all the information in the sixth indication information is communicated through the higher layer signaling, or the sixth indication information includes the part of information communicated through the higher layer signaling, the network device does not need to send the sixth indication information or this part of information (the part of information communicated through the higher layer signaling) in the sixth indication information in the search space.

For example, the higher layer signaling may be RRC signaling or MAC signaling.

S1302: The network device sends seventh indication information in a fourth search space, where the seventh indication information indicates a start transmission moment for the first data. Correspondingly, the terminal device monitors and receives the seventh indication information in the fourth search space.

A transmission moment interval (namely, a sending cycle) of the foregoing two adjacent pieces of sixth indication information is greater than a monitoring cycle of the fourth search space.

S1303: The network device sends the first data to the terminal device based on the frequency domain resource and the start transmission moment. Correspondingly, the terminal device receives the first data from the network device based on the frequency domain resource and the start transmission moment.

In this embodiment of this application, the terminal device receives the sixth indication information sent by the network device. Because the sending cycle of the sixth indication information is greater than the monitoring cycle of the fourth search space, high redundancy of transmission of scheduling signaling caused by repeated sending of a frequency resource in the fourth search space is avoided. According to the solution of this application, a quantity of times of receiving frequency domain resource information can be reduced, to reduce the redundancy of transmission of the scheduling signaling, improve network transmission efficiency, and reduce power consumption of the terminal device. The terminal device receives the seventh indication information sent by the network device in the monitoring cycle of the fourth search space. Compared with semi-persistent scheduling, data transmission can be triggered in a timely manner when data arrives, and a waiting delay for data transmission is reduced.

For content indicated by the sixth indication information, refer to the related description of the first indication information. For related description of the fourth search space, refer to the related description of the second search space. For related description of the seventh indication information, refer to the related description of the second indication information. Details are not described herein again.

For related description of S1303 in this embodiment of this application, refer to the related description of S203 in the foregoing method 200. Details are not described herein again.

FIG. 14 shows still another resource indication method 1400 according to this embodiment of this application. As shown in FIG. 14, the method 1400 may include the following steps.

S1401: A network device sends eighth indication information through higher layer signaling, where the eighth indication information indicates a frequency domain resource for sending second data by a terminal device. Correspondingly, the terminal device receives the eighth indication information.

For example, all information in the eighth indication information may be communicated through the higher layer signaling; or a part of information in the eighth indication information may be communicated through the higher layer signaling, and a part of information in the eighth indication information may be communicated through physical layer signaling. It may be understood that a sum of the part of information communicated through the higher layer signaling and the part of information communicated through the physical layer signaling in the eighth indication information may be the first indication information, or may be some information in the first indication information. This is not limited in this application.

It may be understood that when all the information in the eighth indication information is communicated through the higher layer signaling, or the eighth indication information includes the part of information communicated through the higher layer signaling, the network device does not need to send the eighth indication information or this part of information (the part of information communicated through the higher layer signaling) in the eighth indication information in the search space.

For example, the higher layer signaling may be RRC signaling or MAC signaling.

S 1402: The terminal device sends ninth indication information at a second transmission opportunity, where the ninth indication information indicates a start transmission moment at which the terminal device sends the second data. Correspondingly, the network device monitors and receives the ninth indication information at the second transmission opportunity.

A transmission moment interval (namely, a sending cycle) of the foregoing two adjacent pieces of eighth indication information is greater than a transmission opportunity cycle of the second transmission opportunity.

S1403: The terminal device sends the second data to the network device based on the frequency domain resource and the start transmission moment. Correspondingly, the network device receives the second data from the terminal device based on the frequency domain resource and the start transmission moment.

In this embodiment of this application, the terminal device receives the eighth indication information sent by the network device, to allocate in advance an uplink transmission resource that can be used by the terminal device. The sending cycle of the eighth indication information is the transmission opportunity cycle of the second transmission opportunity. This avoids a problem that signaling transmission redundancy is high because the terminal device repeatedly sends, at the second transmission opportunity, a frequency domain resource that is expected to be used for data transmission. According to the solution of this application, a quantity of times of sending frequency domain resource information can be reduced, to reduce redundancy of transmission of scheduling signaling, improve network transmission efficiency, and reduce power consumption of the terminal device. After data arrives, the terminal device sends the fifth indication information in the transmission cycle of the second transmission opportunity, to notify the network device of a time domain resource for data transmission that is expected by the terminal device in this case, so as to avoid a problem that a transmission resource is wasted to reduce a delay.

For content indicated by the eighth indication information, refer to the related description of the fourth indication information. For related description of the second transmission opportunity, refer to the related description of the first transmission opportunity. For related description of the ninth indication information, refer to the related description of the fifth indication information. Details are not described herein again.

For related description of S 1403 in this embodiment of this application, refer to the related description of S 1103 in the foregoing method 1100. Details are not described herein again.

In embodiments provided in this application, the methods provided in embodiments of this application are separately described from perspectives of the network device, the terminal device, and interaction between the network device and the terminal device. To implement functions in the methods provided in embodiments of this application, the network device and the terminal device may include a hardware structure and/or a software module, to implement the foregoing functions in a form of the hardware structure, the software module, or a combination of the hardware structure and the software module. Whether a function in the foregoing functions is implemented by the hardware structure, the software module, or the combination of the hardware structure and the software module depends on particular applications and design constraints of the technical solutions.

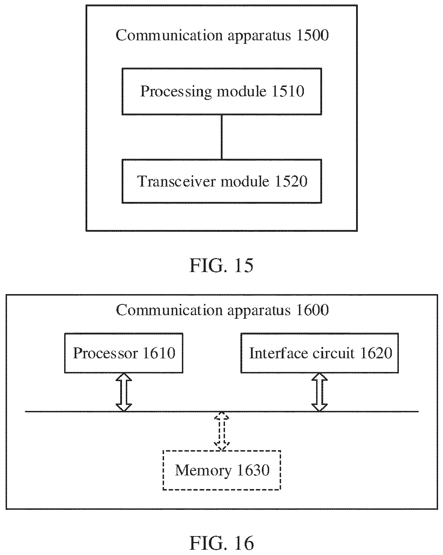

FIG. 15 and FIG. 16 are schematic diagrams of structures of possible communication apparatuses according to embodiments of this application. These communication apparatuses can implement functions of the terminal device or the network device in the foregoing method embodiments, and therefore can also achieve beneficial effects of the foregoing method embodiments. In embodiments of this application, the communication apparatus may be the scheduling node 110 shown in FIG. 1, may be the scheduled node 120 shown in FIG. 1, or may be a module (such as a chip) used in a scheduling node or a scheduled node. For example, the communication apparatus may be a terminal device, may be a network device, or may be a module (such as a chip) used in a terminal device or a network device.

As shown in FIG. 15, a communication apparatus 1500 includes a processing module 1510 and a transceiver module 1520. The communication apparatus 1500 may be configured to implement the function of the terminal device or the network device in the method embodiment shown in FIG. 2, FIG. 11, FIG. 13, or FIG. 14.

When the communication apparatus 1500 is configured to implement the function of the terminal device in the method embodiment in FIG. 2, the processing module 1510 is configured to control the transceiver module 1520 to: monitor and receive first indication information in a first search space, where the first indication information indicates a frequency domain resource for first data; and monitor and receive second indication information in a second search space, where the second indication information indicates a start transmission moment for the first data, and a monitoring cycle of the first search space is greater than a monitoring cycle of the second search space. The processing module 1510 is further configured to: determine the frequency domain resource and the start transmission moment based on the first indication information and the second indication information, and control the transceiver module 1520 to receive the first data.

For example, the first indication information further indicates at least one of the following information: a modulation and coding scheme for the first data or a size of a time domain resource for the first data; or the second indication information further indicates at least one of the following information: a modulation and coding scheme for the first data or a size of a time domain resource for the first data.

For example, the second indication information is carried through a sequence or a physical downlink control channel.

For example, the transceiver module 1520 is further configured to receive configuration information, where the configuration information is used to configure either of the monitoring cycle of the first search space and the monitoring cycle of the second search space.

For example, a frequency domain resource for communicating the second indication information is the same as the frequency domain resource for the first data, or a size of a frequency domain resource for communicating the second indication information is less than a size of a frequency domain resource for receiving the first data.

For example, a frequency domain resource of the second search space is the same as a frequency domain resource of the first search space, or a size of a frequency domain resource of the second search space is less than a size of a frequency domain resource of the first search space.

For example, the processing module 1510 is further configured to determine either of a start location of the second search space and the monitoring cycle of the second search space based on a slot location in which the second indication information is received in the second search space.

For example, the transceiver module 1520 is further configured to receive third indication information, where the third indication information indicates either of the start location of the second search space and a monitoring cycle of the second search space.

For example, the processing module 1510 is further configured to stop monitoring the second indication information in remaining continuous monitoring duration in a current monitoring cycle of the second search space.

When the communication apparatus 1500 is configured to implement the function of the terminal device in the method embodiment in FIG. 11, the processing module 1510 is configured to control the transceiver module 1520 to monitor and receive fourth indication information in a third search space, where the fourth indication information indicates a frequency domain resource for second data. The transceiver module 1520 is configured to send fifth indication information at a first transmission opportunity, where the fifth indication information indicates a start transmission moment for the second data, and a monitoring cycle of the third search space is greater than a transmission opportunity cycle of a first transmission opportunity space. The processing module 1510 is further configured to control, based on the frequency domain resource and the start transmission moment, the transceiver module 1520 to send the second data.

For example, the fourth indication information further indicates at least one of the following information: a modulation and coding scheme for the second data or a size of a time domain resource for the second data. Alternatively, the fifth indication information further indicates at least one of the following information: a modulation and coding scheme for the second data or a size of a time domain resource for the second data.

For example, the fifth indication information is carried through a sequence, a physical uplink control channel, or a physical uplink shared channel.

For example, the transceiver module 1520 is further configured to receive configuration information, where the configuration information is used to configure either of the monitoring cycle of the third search space and the transmission opportunity cycle of the first transmission opportunity.

For example, a frequency domain resource for communicating the fifth indication information is the same as a frequency domain resource for sending the data, or a size of a frequency domain resource for communicating the fifth indication information is less than a size of a frequency domain resource for sending the data.

When the communication apparatus 1500 is configured to implement the function of the terminal device in the method embodiment in FIG. 13, the transceiver module 1520 is configured to receive sixth indication information, where the sixth indication information indicates a frequency domain resource for first data. The processing module 1510 is configured to control the transceiver module 1520 to monitor and receive seventh indication information in a fourth search space, where the seventh indication information indicates a start transmission moment for the first data. The processing module 1510 is further configured to control, based on the frequency domain resource and the start transmission moment, the transceiver module 1520 to receive the first data.

When the communication apparatus 1500 is configured to implement the function of the terminal device in the method embodiment in FIG. 14, the transceiver module 1520 is configured to: receive eighth indication information, where the eighth indication information indicates a frequency domain resource for second data; and send ninth indication information at a second transmission opportunity, where the ninth indication information indicates a start transmission moment at which the terminal device sends the second data. The processing module 1510 is further configured to control, based on the frequency domain resource and the start transmission moment, the transceiver module 1520 to receive the second data.

When the communication apparatus 1500 is configured to implement the function of the network device in the method embodiment in FIG. 2, the transceiver module 1520 is configured to: send first indication information in a first search space, where the first indication information indicates a frequency domain resource for first data; and send second indication information in a second search space, where the second indication information indicates a start transmission moment for the first data, and a monitoring cycle of the first search space is greater than a monitoring cycle of the second search space. The processing module 1510 is configured to control, based on the frequency domain resource and the start transmission moment, the transceiver module 1520 to send the first data to the terminal device.

For example, the first indication information further indicates a modulation and coding scheme for the first data, and/or indicates a size of a time domain resource for the first data; or the second indication information further indicates a modulation and coding scheme for the first data, and/or indicates a size of a time domain resource for the first data.

For example, the second indication information is carried through a sequence or physical layer control signaling.

For example, the transceiver module 1520 is further configured to send configuration information, where the configuration information is used to configure either of the monitoring cycle of the first search space and the monitoring cycle of the second search space.

For example, a frequency domain resource for communicating the second indication information is the same as the frequency domain resource for the first data, or a size of a frequency domain resource for communicating the second indication information is less than a size of the frequency domain resource for the first data.

For example, a frequency domain resource of the second search space is the same as a frequency domain resource of the first search space, or a size of a frequency domain resource of the second search space is less than a size of a frequency domain resource of the first search space.

For example, the processing module 1510 is further configured to determine either of a start location of the second search space and the monitoring cycle of the second search space based on a slot location in which the second indication information is sent in the second search space.

For example, the transceiver module 1520 is further configured to send third indication information, where the third indication information indicates either of the start location of the second search space and a monitoring cycle of the second search space.

When the communication apparatus 1500 is configured to implement the function of the network device in the method embodiment in FIG. 11, the transceiver module 1520 is configured to send fourth indication information in a third search space, where the fourth indication information indicates a frequency domain resource for second data. The processing module 1510 is configured to control the transceiver module 1520 to monitor and receive fifth indication information at a first transmission opportunity, where the fifth indication information indicates a start transmission moment for the second data, and a monitoring cycle of the third search space is greater than a transmission opportunity cycle of a first transmission opportunity space. The processing module 1510 is further configured to control, based on the frequency domain resource and the start transmission moment, the transceiver module 1520 to receive the second data from the terminal device.

For example, the fourth indication information further indicates a modulation and coding scheme for the second data, and/or indicates a size of a time domain resource for the second data; or the fifth indication information further indicates a modulation and coding scheme for the second data, and/or indicates a size of a time domain resource for the second data.

For example, the fifth indication information is carried through a sequence, a physical uplink control channel, or a physical uplink shared channel.

For example, the method further includes: The transceiver module 1520 is further configured to send configuration information, where the configuration information is used to configure either of the monitoring cycle of the third search space and the transmission opportunity cycle of the first transmission opportunity.

For example, a frequency domain resource for communicating the fifth indication information is the same as the frequency domain resource for the second data, or a size of a frequency domain resource for communicating the fifth indication information is less than a size of the frequency domain resource for the second data.

When the communication apparatus 1500 is configured to implement the function of the network device in the method embodiment in FIG. 12, the transceiver module 1520 is configured to: send sixth indication information through higher layer signaling, where the sixth indication information indicates a frequency domain resource for first data; and send seventh indication information in a fourth search space, where the seventh indication information indicates a start transmission moment for the first data. The processing module 1510 is configured to control, based on the frequency domain resource and the start transmission moment, the transceiver module 1520 to send the first data to the terminal device.

When the communication apparatus 1500 is configured to implement the function of the network device in the method embodiment in FIG. 13, the transceiver module 1520 sends eighth indication information through higher layer signaling, where the eighth indication information indicates a frequency domain resource for sending second data by the terminal device. The processing module 1510 is configured to control the transceiver module 1520 to monitor and receive ninth indication information at a second transmission opportunity, where the ninth indication information indicates a start transmission moment at which the terminal device sends the second data. The processing module 1510 is configured to control, based on the frequency domain resource and the start transmission moment, the transceiver module 1520 to send the first data to the terminal device.

For more detailed descriptions of the processing module 1510 and the transceiver module 1520, refer to the related descriptions in the foregoing method embodiments. Details are not described herein again.

It should be understood that the apparatus 1500 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function.

The apparatus 1500 has a function of implementing corresponding steps performed by the terminal device or the network device in the foregoing method. The function may be implemented by hardware, or may be implemented by hardware executing corresponding software. The hardware or the software includes one or more modules corresponding to the foregoing function.

In this embodiment of this application, the apparatus 1500 in FIG. 15 may alternatively be a chip or a chip system, for example, a system on chip (system on chip, SoC).

As shown in FIG. 16, a communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to store instructions executed by the processor 1610, store input data required by the processor 16 10 to run instructions, or store data generated by running instructions by the processor 1610.

When the communication apparatus 1600 is configured to implement the methods in the foregoing method embodiments, the processor 1610 is configured to implement a function of the foregoing processing module 1510, and the interface circuit 1620 is configured to implement a function of the foregoing transceiver module 1520.

When the communication apparatus is a chip-type apparatus or a circuit, the communication apparatus may include a transceiver unit and a processing unit. The transceiver unit may be an input/output circuit and/or a communication interface. The processing unit is an integrated processor, a microprocessor, or an integrated circuit.

When the communication apparatus 1600 is a chip used in a network device, the chip in the network device implements a function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

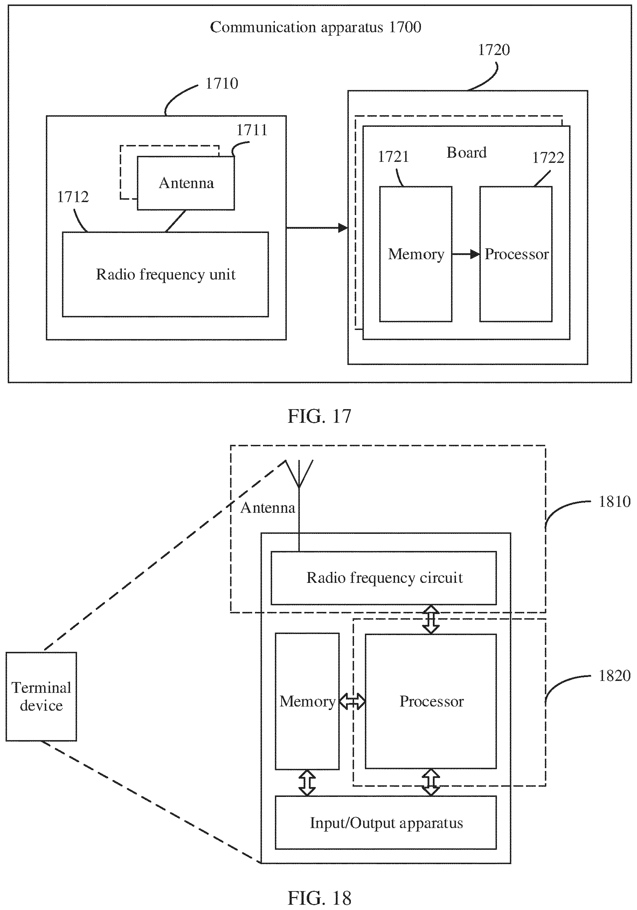

FIG. 17 is a schematic diagram of a simplified structure of a communication apparatus. For ease of understanding and illustration, in FIG. 17, an example in which the communication apparatus is a base station is used. The base station may be applied to the system shown in FIG. 1, may be the scheduling node in FIG. 1, and executes a function of the network device in the foregoing method embodiments.

A communication apparatus 1700 may include a processor 1722, and may further include a transceiver 1710 and a memory 1721. The processor 1722 is configured to support the communication apparatus 1700 in performing a corresponding function in the foregoing methods. The transceiver 1710 may be configured to perform communication by the communication apparatus, for example, configured to send the first indication information. The memory 1721 is coupled to the processor 1722, and may be configured to store a program and data that are necessary for the communication apparatus 1700 to implement functions.

Specifically, the transceiver 1710 may be a wireless transceiver, and may be configured to support the communication apparatus 1700 in receiving and sending signaling and/or data through a radio air interface. The transceiver 1710 may also be referred to as a transceiver unit or a communication unit. The transceiver 1710 may include one or more radio frequency units 1712 and one or more antennas 1711. The radio frequency unit, for example, a remote radio unit (remote radio unit, RRU) or an active antenna unit (active antenna unit, AAU), may be specifically configured to: transmit a radio frequency signal and convert a radio frequency signal, and perform conversion between a radio frequency signal and a baseband signal. The one or more antennas may be specifically configured to radiate and receive a radio frequency signal. Optionally, the transceiver 1710 may include only the foregoing radio frequency unit. In this case, the communication apparatus 1700 may include the transceiver 1710, the memory 1721, the processor 1722, and the antenna 1711.

The memory 1721 and the processor 1722 may be integrated, or may be independent of each other. As shown in FIG. 17, the memory 1721 and the processor 1722 may be integrated into a control unit 1720 of the communication apparatus 1700. For example, the control unit 1720 may include a baseband unit (baseband unit, BBU) of an LTE base station, and the baseband unit may also be referred to as a digital unit (digital unit, DU). Alternatively, the control unit 1720 may include a DU and/or a CU in a base station in 5G and a future radio access technology. The control unit 1720 may include one or more antenna panels. A plurality of antenna panels may jointly support a radio access network (for example, an LTE network) of a single access standard, or a plurality of antenna panels may separately support radio access networks (for example, an LTE network, a 5G network, and another network) of different access standards. The memory 1721 and the processor 1722 may serve one or more antenna panels. In other words, the memory 1721 and the processor 1722 may be separately disposed on each antenna panel. Alternatively, a plurality of antenna panels may share a same memory 1721 and a same processor 1722. In addition, a necessary circuit may be disposed on each antenna panel. For example, the circuit may be configured to implement coupling between the memory 1721 and the processor 1722. The transceiver 1710, the processor 1722, and the memory 1721 may be connected by using a bus (bus) structure and/or another connection medium.

Based on the structure shown in FIG. 17, when the communication apparatus 1700 needs to send data, the processor 1722 may perform baseband processing on the to-be-sent data, and output a baseband signal to the radio frequency unit. The radio frequency unit performs radio frequency processing on the baseband signal, and then sends a radio frequency signal in a form of an electromagnetic wave through the antenna. When data is sent to the communication apparatus 1700, the radio frequency unit receives a radio frequency signal through the antenna, converts the radio frequency signal into a baseband signal, and outputs the baseband signal to the processor 1722. The processor 1722 converts the baseband signal into data and processes the data.

Based on the structure shown in FIG. 17, the transceiver 1710 may be configured to perform the foregoing step performed by the interface circuit 1620. The processor 1722 may be configured to invoke the instructions in the memory 1721 to perform the foregoing step performed by the processor 1610.

When the communication apparatus 1600 is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

FIG. 18 is a schematic diagram of a simplified structure of a terminal device. For ease of understanding and illustration, in FIG. 18, an example in which the terminal device is a mobile phone is used. As shown in FIG. 18, the terminal device includes a processor, a memory, a radio frequency circuit, an antenna, and an input/output apparatus. The processor is mainly configured to process a communication protocol and communication data, control an on-board unit, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of devices may have no input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 18 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 18, the terminal device includes a transceiver unit 1810 and a processing unit 1820. The transceiver unit 1810 may also be referred to as a transceiver, a transceiver machine, a transceiver apparatus, or the like. The processing unit 1820 may also be referred to as a processor, a processing board, a processing module, a processing apparatus, or the like. Optionally, a component that is in the transceiver unit 1810 and that is configured to implement a receiving function may be considered as a receiving unit, and a component that is in the transceiver unit 1810 and that is configured to implement a sending function may be considered as a sending unit. In other words, the transceiver unit 1810 includes the receiving unit and the sending unit. The transceiver unit 1810 sometimes may also be referred to as a transceiver machine, a transceiver, a transceiver circuit, or the like. The receiving unit sometimes may also be referred to as a receiver machine, a receiver, a receiving circuit, or the like. The sending unit sometimes may also be referred to as a transmitter machine, a transmitter, a transmitting circuit, or the like.

It should be understood that the transceiver unit 1810 is configured to perform a sending operation and a receiving operation of the terminal device in the foregoing method embodiments, and the processing unit 1820 is configured to perform an operation other than the sending and receiving operations of the terminal device in the foregoing method embodiments. For example, in an implementation, the transceiver unit 1810 may be configured to perform a sending step, a receiving step, and/or another process configured to support the technology described in this specification in the embodiment shown in FIG. 2, FIG. 11, FIG. 13, or FIG. 14. The processing unit 1820 may be configured to perform a step other than the receiving step or the sending step in the embodiment shown in FIG. 2, FIG. 11, FIG. 13, or FIG. 14, and/or another process configured to support the technology described in this specification.

An embodiment of this application further provides a communication system. Specifically, the communication system includes a network device and a plurality of terminal devices, or may further include more network devices and a plurality of terminal devices. For example, the communication system includes a network device and a terminal device, such as a terminal device, that are configured to implement a related function in FIG. 2, FIG. 11, FIG. 13, or FIG. 14. The network device is separately configured to implement functions of the network device part related to FIG. 2, FIG. 11, FIG. 13, or FIG. 14. The terminal device is configured to implement functions of the terminal device part related to FIG. 2, FIG. 11, FIG. 13, or FIG. 14. For details, refer to the related description in the foregoing method embodiments. Details are not described herein again.

An embodiment of this application further provides a computer-readable storage medium, including instructions. When the instructions are run on a computer, the computer is enabled to perform the method performed by the network device in FIG. 2, FIG. 11, FIG. 13, or FIG. 14; or when the instructions are run on a computer, the computer is enabled to perform the method performed by the terminal device in FIG. 2, FIG. 11, FIG. 13, or FIG. 14.

An embodiment of this application further provides a computer program product, including instructions. When the instructions are run on a computer, the computer is enabled to perform the method performed by the network device in FIG. 2, FIG. 11, FIG. 13, or FIG. 14; or when the instructions are run on a computer, the computer is enabled to perform the method performed by the terminal device in FIG. 2, FIG. 11, FIG. 13, or FIG. 14.

An embodiment of this application provides a chip system. The chip system includes a processor, may further include a memory, and is configured to implement the function of the network device or the first terminal device in the foregoing methods, or is configured to implement the function of the network device and the terminal in the foregoing methods. The chip system may include a chip, or may include a chip and another discrete component.

It may be understood that, the processor in embodiments of this application may be a central processing unit (central processing unit, CPU), or may be another general-purpose processor, a digital signal processor (digital signal processor DSP), an application-specific integrated circuit (application-specific integrated circuit, ASIC), a field-programmable gate array (field-programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by a processor. The software instructions may include a corresponding software module. The software module may be stored in a random access memory (random access memory, RAM), a flash memory, a read-only memory (Read-Only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, all or some of the processes or functions in embodiments of this application are executed. The computer may be a general-purpose computer, a dedicated computer, a computer network, or another programmable apparatus. The computer programs or instructions may be stored in a computer-readable storage medium, or may be transmitted through the computer-readable storage medium. The computer-readable storage medium may be any usable medium accessible by a computer, or a data storage device like a server integrating one or more usable media. The usable medium may be a magnetic medium, for example, a floppy disk, a hard disk, or a magnetic tape, may be an optical medium, for example, a DVD, or may be a semiconductor medium, for example, a solid state disk (solid state disk, SSD).

In the several embodiments provided in this application, it should be understood that the disclosed systems, apparatuses, and methods may be implemented in other manners. For example, the foregoing described apparatus embodiments are merely examples. For example, division into the units is merely a logical function division and may be another division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in an electronic form, a mechanical form, or another form.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

**Claims**

1. A resource indication method, comprising:

   monitoring and receiving first indication information in a first search space, wherein the first indication information indicates a frequency domain resource for first data;
   monitoring and receiving second indication information in a second search space, wherein the second indication information indicates a start transmission moment for the first data, and a monitoring cycle of the first search space is greater than a monitoring cycle of the second search space; and
   receiving the first data based on the frequency domain resource and the start transmission moment.

2. The method according to claim 1, wherein

   the first indication information further indicates at least one of the following information: a modulation and coding scheme for the first data or a size of a time domain resource for the first data; or
   the second indication information further indicates at least one of the following information: a modulation and coding scheme for the first data or a size of a time domain resource for the first data.

3. The method according to claim 1 or 2, wherein the second indication information is carried through a sequence or a physical downlink control channel.

4. The method according to any one of claims 1 to 3, wherein the method further comprises:
   receiving configuration information, wherein the configuration information is used to configure either of the monitoring cycle of the first search space and the monitoring cycle of the second search space.

5. The method according to any one of claims 1 to 4, wherein a frequency domain resource for the second indication information is the same as the frequency domain resource for the first data, or a size of a frequency domain resource for the second indication information is less than a size of the frequency domain resource for the first data.

6. The method according to any one of claims 1 to 4, wherein a frequency domain resource of the second search space is the same as a frequency domain resource of the first search space, or a size of a frequency domain resource of the second search space is less than a size of a frequency domain resource of the first search space.

7. The method according to any one of claims 1 to 6, wherein the method further comprises:
   determining either of a start location of the second search space and the monitoring cycle of the second search space based on a slot location in which the second indication information is received in the second search space.

8. The method according to any one of claims 1 to 6, wherein the method further comprises:
   receiving third indication information, wherein the third indication information indicates either of a start location of the second search space and the monitoring cycle of the second search space.

9. The method according to any one of claims 1 to 8, wherein the method further comprises:
   stopping monitoring the second indication information in remaining continuous monitoring duration in a current monitoring cycle of the second search space.

10. A resource indication method, comprising:

monitoring and receiving fourth indication information in a third search space, wherein the fourth indication information indicates a frequency domain resource for second data;

sending fifth indication information at a first transmission opportunity, wherein the fifth indication information indicates a start transmission moment for the second data, and a monitoring cycle of the third search space is greater than a transmission opportunity cycle of the first transmission opportunity; and

sending the second data based on the frequency domain resource and the start transmission moment.

11. The method according to claim 10, wherein

the fourth indication information further indicates at least one of the following information: a modulation and coding scheme for the second data or a size of a time domain resource for the second data; or

the fifth indication information further indicates at least one of the following information: a modulation and coding scheme for the second data or a size of a time domain resource for the second data.

12. The method according to claim 10 or 11, wherein the fifth indication information is carried through a sequence, a physical uplink control channel, or a physical uplink shared channel.

13. The method according to any one of claims 10 to 12, wherein the method further comprises:
receiving configuration information, wherein the configuration information is used to configure either of the monitoring cycle of the third search space and the transmission opportunity cycle of the first transmission opportunity.

14. The method according to any one of claims 10 to 13, wherein a frequency domain resource for the fifth indication information is the same as the frequency domain resource for the second data, or a size of a frequency domain resource for the fifth indication information is less than a size of the frequency domain resource for the second data.

15. A resource indication method, comprising:

sending first indication information in a first search space, wherein the first indication information indicates a frequency domain resource for first data;

sending second indication information in a second search space, wherein the second indication information indicates a start transmission moment for the first data, and a monitoring cycle of the first search space is greater than a monitoring cycle of the second search space; and

sending the first data to a terminal device based on the frequency domain resource and the start transmission moment.

16. The method according to claim 15, wherein the first indication information further indicates a modulation and coding scheme for the first data, and/or indicates a size of a time domain resource for the first data; or

the second indication information further indicates a modulation and coding scheme for the first data, and/or indicates a size of a time domain resource for the first data.

17. The method according to claim 15 or 16, wherein the second indication information is carried through a sequence or a physical downlink control channel.

18. The method according to any one of claims 15 to 17, wherein the method further comprises:
sending configuration information, wherein the configuration information is used to configure either of the monitoring cycle of the first search space and the monitoring cycle of the second search space.

19. The method according to any one of claims 15 to 18, wherein a frequency domain resource for the second indication information is the same as the frequency domain resource for the first data, or a size of a frequency domain resource for the second indication information is less than a size of the frequency domain resource for the first data.

20. The method according to any one of claims 15 to 18, wherein a frequency domain resource of the second search space is the same as a frequency domain resource of the first search space, or a size of a frequency domain resource of the second search space is less than a size of a frequency domain resource of the first search space.

21. The method according to any one of claims 15 to 20, wherein the method further comprises:
determining either of a start location of the second search space and the monitoring cycle of the second search space based on a slot location in which the second indication information is sent in the second search space.

**22.** The method according to any one of claims 15 to 21, wherein the method further comprises:
sending third indication information, wherein the third indication information indicates either of the start location of the second search space and the monitoring cycle of the second search space.

**23.** A resource indication method, comprising:

sending fourth indication information in a third search space, wherein the fourth indication information indicates a frequency domain resource for second data;
monitoring and receiving fifth indication information at a first transmission opportunity, wherein the fifth indication information indicates a start transmission moment for the second data, and a monitoring cycle of the third search space is greater than a transmission opportunity cycle of the first transmission opportunity; and
receiving the second data based on the frequency domain resource and the start transmission moment.

**24.** The method according to claim 23, wherein the fourth indication information further indicates a modulation and coding scheme for the second data, and/or indicates a size of a time domain resource for the second data; or
the fifth indication information further indicates a modulation and coding scheme for the second data, and/or a size of a time domain resource for the second data.

**25.** The method according to claim 23 or 24, wherein the fifth indication information is carried through a sequence, a physical uplink control channel, or a physical uplink shared channel.

**26.** The method according to any one of claims 23 to 25, wherein the method further comprises:
sending configuration information, wherein the configuration information is used to configure either of the monitoring cycle of the third search space and the transmission opportunity cycle of the first transmission opportunity.

**27.** The method according to any one of claims 23 to 26, wherein a frequency domain resource for the fifth indication information is the same as the frequency domain resource for the second data, or a size of a frequency domain resource for the fifth indication information is less than a size of the frequency domain resource for the second data.

**28.** A communication apparatus, comprising a module configured to perform the method according to any one of claims 1 to 9, claims 10 to 14, claims 15 to 22, or claims 23 to 27.

**29.** A communication apparatus, comprising a processor and a communication interface, wherein the communication interface is configured to receive a signal from a communication apparatus other than the communication apparatus and transmit the signal to the processor or send a signal from the processor to a communication apparatus other than the communication apparatus, and the processor is configured to implement the method according to any one of claims 1 to 9, claims 10 to 14, claims 15 to 22, or claims 23 to 27 by using a logic circuit or executing code instructions.

**30.** A computer-readable storage medium, wherein the computer-readable storage medium stores a computer program, and when the computer program is run, the method according to any one of claims 1 to 9, claims 10 to 14, claims 15 to 22, or claims 23 to 27 is implemented.

**31.** A computer program product, wherein the computer program product comprises computer program code, and when the computer program code is run, the method according to any one of claims 1 to 9, claims 10 to 14, claims 15 to 22, or claims 23 to 27 is implemented.

100

110

120

FIG. 1

200

Network device

Terminal device

S201: First indication information

S202: Second indication information

S203: First data

FIG. 2

Frequency
domain

Second indication
information    DMRS

A terminal device
transmits a data block

Slot n    Slot n+1

Time domain

FIG. 3

Frequency
domain

Second indication information

Area 1

DMRS

A terminal
device
transmits a
data block

Area 2

Slot n    Second indication information    Slot n+1

Time domain

FIG. 4

Monitoring cycle of a first search space

Monitoring period of a second search space

...

Monitoring cycle of the second search space

FIG. 5

FIG. 6

FIG. 7

Monitoring period

Configured continuous
monitoring duration

Actual continuous
monitoring duration

25 slots          25 slots          25 slots

FIG. 8

Monitoring period

Configured continuous      Configured continuous      Configured continuous
monitoring duration        monitoring duration        monitoring duration

Actual continuous          Actual continuous          Actual continuous
monitoring duration        monitoring duration        monitoring duration

Monitoring cycle           Monitoring cycle           Monitoring cycle

FIG. 9

Monitoring period

Configured continuous   Configured continuous                    Configured continuous
monitoring duration     monitoring duration                     monitoring duration

                                              Prolonged period

Actual continuous                                                        25 slots
monitoring      25 slots        Actual continuous     25 slots     Actual continuous
duration                        monitoring duration               monitoring duration

FIG. 10

1100

```
┌──────────┐                                    ┌──────────┐
│ Network  │                                    │ Terminal │
│  device  │                                    │  device  │
└──────────┘                                    └──────────┘
     │                                               │
     │── S1101: Fourth indication information ──────▶│
     │                                               │
     │◀───── S1102: Fifth indication information ────│
     │                                               │
     │◀──────── S1103: Second data ──────────────────│
     │                                               │
```

FIG. 11

Transmission
opportunity duration

Transmission
opportunity duration

Transmission
opportunity duration

Transmission
opportunity duration

Transmission opportunity cycle    Transmission opportunity cycle    Transmission opportunity cycle

Transmission opportunity

Configuration
manner 1

Transmission opportunity | length

Transmission
opportunity
interval

Configuration
manner 2

Transmission
opportunity
interval

Transmission
opportunity
length

Configuration
manner 3

Transmission opportunity interval

Transmission opportunity length

FIG. 12

1300

```
┌──────────┐                                          ┌──────────┐
│ Network  │                                          │ Terminal │
│ device   │                                          │ device   │
└──────────┘                                          └──────────┘
     │                                                     │
     │────── S1301: Sixth indication information ─────────▶│
     │                                                     │
     │                                                     │
     │────── S1302: Seventh indication information ──────▶│
     │                                                     │
     │                                                     │
     │────────────── S1303: First data ─────────────────▶│
     │                                                     │
```

FIG. 13

1400

```
┌──────────┐                                          ┌──────────┐
│ Network  │                                          │ Terminal │
│ device   │                                          │ device   │
└──────────┘                                          └──────────┘
     │                                                     │
     │────── S1401: Eighth indication information ───────▶│
     │                                                     │
     │                                                     │
     │◀───── S1402: Ninth indication information ─────────│
     │                                                     │
     │                                                     │
     │◀───────────── S1403: Second data ─────────────────│
     │                                                     │
```

FIG. 14

Communication apparatus 1500

Processing module 1510

Transceiver module 1520

FIG. 15

Communication apparatus 1600

Processor 1610

Interface circuit 1620

Memory 1630

FIG. 16

Communication apparatus 1700

1720

1710

1711

Antenna

1712

Radio frequency unit

1721   Board   1722

Memory → Processor

FIG. 17

Antenna

Terminal device

Radio frequency circuit

1810

Memory ⇄ Processor

1820

Input/Output apparatus

FIG. 18

<div align="center">**INTERNATIONAL SEARCH REPORT**</div>

| International application No. |
|---|
| **PCT/CN2022/115305** |

| A. | CLASSIFICATION OF SUBJECT MATTER |
|---|---|

H04W 72/04(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 搜索空间, 检测, 监测, 下行控制信息, 第一, 第二, 指示, 配置, 分配, 调度, 频域, 频率, 时域, 子帧, 时隙, 资源, 周期, 传输时机, search space, monitor, DCI, PDCCH, first, second, indicate, configure, allocate, scheduling, PDSCH, PUSCH, frequency domain, time domain, subframe, slot, resource, period, transmission opportunity

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2018010184 A1 (GUANGDONG OPPO MOBILE TELECOMMUNICATIONS CO., LTD.) 18 January 2018 (2018-01-18)<br>description, page 8, line 4 to page 16, line 28, page 18, line 1 to page 26, line 16 | 1-31 |
| X | CN 110740508 A (ZHUHAI MEIZU TECHNOLOGY CO., LTD.) 31 January 2020 (2020-01-31)<br>description, paragraphs [0051]-[0088] | 1-31 |
| A | CN 108024340 A (HUAWEI TECHNOLOGIES CO., LTD.) 11 May 2018 (2018-05-11)<br>entire document | 1-31 |
| A | WO 2021157938 A1 (LG ELECTRONICS INC.) 12 August 2021 (2021-08-12)<br>entire document | 1-31 |
| A | CN 111787615 A (BEIJING SAMSUNG TELECOM R&D CENTER et al.) 16 October 2020 (2020-10-16)<br>entire document | 1-31 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 October 2022** | **28 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/115305**

| Patent document cited in search report | | | Publication date (day/month/year) | Patent family member(s) | | | Publication date (day/month/year) |
|---|---|---|---|---|---|---|---|
| WO | 2018010184 | A1 | 18 January 2018 | US | 2021243740 | A1 | 05 August 2021 |
| | | | | EP | 3442297 | A1 | 13 February 2019 |
| | | | | CN | 109196941 | A | 11 January 2019 |
| | | | | AU | 2016415070 | A1 | 20 December 2018 |
| | | | | CA | 3026441 | A1 | 18 January 2018 |
| | | | | JP | 2019525517 | A | 05 September 2019 |
| | | | | TW | 201804836 | A | 01 February 2018 |
| | | | | BR | 112019000615 | A2 | 24 April 2019 |
| | | | | KR | 20190031438 | A | 26 March 2019 |
| | | | | US | 2019141682 | A1 | 09 May 2019 |
| | | | | RU | 2717908 | C1 | 26 March 2020 |
| | | | | SG | 11201810954 | A1 | 30 January 2019 |
| | | | | IN | 201817048347 | A | 08 March 2019 |
| | | | | EP | 3442297 | A4 | 17 April 2019 |
| | | | | MX | 2019000596 | A1 | 22 April 2019 |
| | | | | ZA | 201808245 | A | 28 August 2019 |
| | | | | HK | 1259989 | A0 | 13 December 2019 |
| | | | | SG | 11201810954 | B | 08 January 2021 |
| | | | | US | 11019609 | B2 | 25 May 2021 |
| | | | | JP | 6903690 | B2 | 14 July 2021 |
| | | | | AU | 2016415070 | B2 | 29 July 2021 |
| | | | | CN | 113347726 | A | 03 September 2021 |
| CN | 110740508 | A | 31 January 2020 | CN | 110740508 | B | 23 September 2022 |
| CN | 108024340 | A | 11 May 2018 | US | 2019261332 | A1 | 22 August 2019 |
| | | | | JP | 2020501411 | A | 16 January 2020 |
| | | | | WO | 2018082636 | A1 | 11 May 2018 |
| | | | | EP | 3531766 | A1 | 28 August 2019 |
| | | | | KR | 20190073514 | A | 26 June 2019 |
| | | | | IN | 201937018387 | A | 05 July 2019 |
| | | | | VN | 64815 | A | 25 July 2019 |
| | | | | EP | 3531766 | A4 | 09 October 2019 |
| | | | | KR | 102212799 | B1 | 04 February 2021 |
| | | | | CN | 108024340 | B | 11 February 2022 |
| | | | | EP | 3531766 | B1 | 16 February 2022 |
| WO | 2021157938 | A1 | 12 August 2021 | None | | | |
| CN | 111787615 | A | 16 October 2020 | WO | 2020204637 | A1 | 08 October 2020 |
| | | | | US | 2022210816 | A1 | 30 June 2022 |

Form PCT/ISA/210 (patent family annex) (January 2015)

**EP 4 383 900 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111028825